# EUROPEAN PATENT APPLICATION

(11) **EP 2 792 393 A1**
(43) Date of publication of application: **22.10.2014**
(21) Application number: 13182204.1
(22) Date of filing: 29.08.2013
(51) Int. Cl.: A63F 13/30, H04L 29/06

(54) **Information processing apparatus, information processing system, method for controlling information processing apparatus, and control program for information processing appartus**

(30) Priority: 16.04.2013 JP 2013085869
(71) Applicant: NINTENDO CO., LTD., Kyoto-shi, Kyoto 601-8501 (JP)
(72) Inventor: Takahashi, Ryutaro, Kyoto-shi, Kyoto 601-8501 (JP); Nakae, Eisaku, Kyoto-shi, Kyoto 601-8501 (JP); Wada, Masaki, Kyoto-shi, Kyoto 601-8501 (JP); Ueno, Takaomi, Kyoto-shi, Kyoto 601-8501 (JP)
(74) Representative: Grünecker, Kinkeldey, Stockmair & Schwanhäusser

(57) **Abstract**

An exemplary embodiment provides an information processing apparatus (1) provided to be capable of communicating data with another information processing apparatus present within a prescribed range. The information processing apparatus (1) includes data transmission and reception means (16) for transmitting and receiving data to and from another information processing apparatus, display control means (13) for performing display processing based on received data, and apparatus rejection setting means (13) capable of setting rejection of execution of display processing based on the data received from another information processing apparatus. The data transmission and reception means transmits the received data to another different information processing apparatus provided to be capable of communicating data, regardless of whether or not data received from another information processing apparatus has been set by the apparatus rejection setting means (13).

## Description

### FIELD

The technology herein generally relates to an information processing apparatus and the like, capable of communicating data among information processing apparatuses.

### BACKGROUND AND SUMMARY

As described in Japanese Patent Laying-Open No. 2011-000309, a system capable of providing data which can be made use of by an application to other information processing apparatuses by using near field communication has conventionally been known.

In addition, a configuration of an apparatus provided to be able to reject reception of data transmitted from another apparatus has generally been known.

In the system above, in a case where data is communicated with a communication counterpart and transmitted to another information processing apparatus through near field communication, data is not transmitted from an apparatus from which reception has been rejected. Alternatively, even if data is transmitted, the data is discarded in that another apparatus and hence data could not continually propagate to other apparatuses.

Exemplary embodiments provide an information processing apparatus, an information processing system, a method for controlling an information processing apparatus, and a control program for an information processing apparatus, capable of enhancing zest of data communication without missing an opportunity for data communication.

An exemplary embodiment provides an information processing apparatus provided to be capable of communicating data with another information processing apparatus present within a prescribed range. The information processing apparatus includes data transmission and reception means configured to transmit and receive data to and from another information processing apparatus, display control means configured to perform display processing based on received data, and apparatus rejection setting means configured to be able to set rejection of execution of display processing based on the data received from another information processing apparatus. The data transmission and reception means is configured to transmit the received data to another different information processing apparatus provided to be capable of communicating the data, regardless of whether or not data received from another information processing apparatus has been set by the apparatus rejection setting means.

According to the exemplary embodiment, zest of data communication can be enhanced without missing an opportunity for data communication.

In an exemplary embodiment, the data has identification information identifying the information processing apparatus. The apparatus rejection setting means is configured to set identification information corresponding to another information processing apparatus as setting for rejecting execution of display processing based on the data received from another information processing apparatus.

In an exemplary embodiment, the apparatus rejection setting means is configured to set identification information corresponding to another information processing apparatus in accordance with a prescribed instruction. The display control means includes data determination means configured to determine whether or not the received data is data relating to an information processing apparatus set by the apparatus rejection setting means and data display processing means configured to perform display processing based on the received data, based on the determination.

In an exemplary embodiment, the data determination means is configured to further determine whether or not the received data is data received through data communication with the information processing apparatus set by the apparatus rejection setting means when it is determined that the received data is not data relating to the information processing apparatus set by the apparatus rejection setting means. The data display processing means is configured not to perform the display processing when determination as data received through data communication with the information processing apparatus set by the apparatus rejection setting means has been made.

In an exemplary embodiment, the data determination means is configured to further determine whether or not the received data is data received through data communication with the information processing apparatus set by the apparatus rejection setting means when it is determined that the received data is data relating to the information processing apparatus set by the apparatus rejection setting means. The data display processing means is configured to perform display processing based on partial data of the received data when determination as data received through data communication with an information processing apparatus not set by the apparatus rejection setting means has been made.

In an exemplary embodiment, data processing means configured to perform prescribed processing on the received data when it is determined that the received data is not data relating to the information processing apparatus set by the apparatus rejection setting means and not to perform the prescribed processing when it is determined that the received data is data relating to the information processing apparatus set by the apparatus rejection setting means is further included. The data transmission and reception means is configured to transmit data processed by the data processing means to another different information processing apparatus provided to be capable of communicating the data.

In an exemplary embodiment, the prescribed processing is at least processing for editing data received between apparatuses. The data processing means is configured to edit the received data when it is determined that the received data is not data relating to the information processing apparatus set by the apparatus rejection setting means.

In an exemplary embodiment, the data processing means is configured not to edit the received data when it is determined that the received data is data relating to the information processing apparatus set by the apparatus rejection setting means.

In an exemplary embodiment, the data transmission and reception means is configured to transmit edited data processed by the data processing means to another different information processing apparatus provided to be capable of communicating the data.

In an exemplary embodiment, the display control means includes data determination means configured to determine whether or not the received data is data received through data communication with an information processing apparatus set by the apparatus rejection setting means and data display processing means configured to perform display processing based on the received data, based on the determination.

In an exemplary embodiment, data processing means configured to perform prescribed processing on the received data when it is determined that the received data is not data received through data communication with the information processing apparatus set by the apparatus rejection setting means and not to perform the prescribed processing when it is determined that the received data is data received through data communication with the information processing apparatus set by the apparatus rejection setting means is further included. The data transmission and reception means is configured to transmit data processed by the data processing means to another different information processing apparatus provided to be capable of communicating the data.

In an exemplary embodiment, the data includes character information having identification information identifying the information processing apparatus.

An exemplary embodiment provides an information processing system including a plurality of information processing apparatuses provided to be capable of communicating data with another information processing apparatus present within a prescribed range. Each information processing apparatus includes data transmission and reception means configured to transmit and receive data to and from another information processing apparatus, display control means configured to perform display processing based on received data, and apparatus rejection setting means configured to be able to set rejection of execution of display processing based on the data received from another information processing apparatus. The data transmission and reception means is configured to transmit the received data to another different information processing apparatus provided to be capable of communicating the data, regardless of whether or not data received from another information processing apparatus has been set by the apparatus rejection setting means.

An exemplary embodiment provides a method for controlling an information processing apparatus provided to be capable of communicating data with another information processing apparatus present within a prescribed range, including the steps of transmitting and receiving data to and from another information processing apparatus, performing display processing based on received data, and rejecting execution of display processing based on data received from another information processing apparatus. In the step of transmitting and receiving data, the received data is transmitted to another different information processing apparatus provided to be capable of communicating the data, regardless of whether or not data received from another information processing apparatus has been rejected in the rejecting step.

An exemplary embodiment provides a control program executed by a computer of an information processing apparatus provided to be capable of communicating data with another information processing apparatus present within a prescribed range. The computer, by executing the control program, performs the steps of transmitting and receiving data to and from another information processing apparatus, performing display processing based on received data, and rejecting execution of display processing based on data received from another information processing apparatus. In the step of transmitting and receiving data, the received data is transmitted to another different information processing apparatus provided to be capable of communicating the data, regardless of whether or not data received from another information processing apparatus has been rejected in the rejecting step.

The foregoing and other objects, features, aspects and advantages of the exemplary embodiments will become more apparent from the following detailed description of the exemplary embodiments when taken in conjunction with the accompanying drawings.

### BRIEF DESCRIPTION OF THE DRAWINGS

Fig. 1 shows an exemplary illustrative non-limiting configuration of an information terminal control system according to an exemplary embodiment.
Fig. 2 shows an exemplary illustrative non-limiting configuration of hardware of an information processing apparatus according to an exemplary embodiment.
Fig. 3 shows an exemplary illustrative non-limiting configuration of hardware of a server according to an exemplary embodiment.
Fig. 4 shows exemplary illustrative non-limiting storage contents in a part of a storage area within the information processing apparatus according to an exemplary embodiment.
Fig. 5 shows exemplary illustrative non-limiting outlines of processing of a game application according to an exemplary embodiment.
Fig. 6 shows an exemplary illustrative non-limiting timing chart of processing in each apparatus in the information terminal control system according to an exemplary embodiment.
Fig. 7 shows an exemplary illustrative non-limiting diagram for illustrating a configuration of character information according to an exemplary embodiment.
Figs. 8 to 13 each show exemplary illustrative non-limiting character information according to an exemplary embodiment.
Fig. 14 shows an exemplary illustrative non-limiting screen of records according to an exemplary embodiment.
Figs. 15 to 18 each show an exemplary illustrative non-limiting timing chart in communication processing according to an exemplary embodiment.
Fig. 19 shows an exemplary illustrative non-limiting flowchart of a sub routine of step A14 in Fig. 18 according to an exemplary embodiment.
Figs. 20 to 25 each show an exemplary illustrative non-limiting displayed image according to an exemplary embodiment.
Fig. 26 shows exemplary illustrative non-limiting outlines of processing for communication among apparatuses each having a function for apparatus rejection setting in the information terminal control system.
Fig. 27 shows one exemplary ifittstritive non-limiting example of a screen for apparatus rejection setting based on the function for apparatus rejection setting.
Fig. 28 shows an exemplary illustrative non-limiting specific example of a timing chart in processing for communication among apparatuses each having the function for apparatus rejection setting.
Fig. 29 shows an exemplary illustrative non-limiting flowchart illustrating a sub routine of display determination processing performed in each information processing apparatus.
Fig. 30 shows an exemplary illustrative non-limiting flowchart illustrating a sub routine of display processing performed in each information processing apparatus.
Fig. 31 shows an exemplary illustrative non-limiting flowchart illustrating a sub routine of data processing performed in each information processing apparatus.
Fig. 32 shows an exemplary illustrative non-limiting diagram illustrating display processing based on partial data of reception data.
Fig. 33 shows an exemplary illustrative non-limiting diagram illustrating another specific example of a timing chart in processing for communication among apparatuses each having the function for apparatus rejection setting.

### DETAILED DESCRIPTION OF NON-LIMITING EXAMPLE EMBODIMENTS

An embodiment of an information terminal control system will be described hereinafter with reference to the drawings. In the description below, parts having the same function and action have the same reference characters allotted throughout the figures and redundant description will not be repeated.

### [Configuration of Information Terminal Control System]

An information terminal control system 1000 including information processing apparatuses 1A to 1C and a server 2 will be described below as one embodiment. Information processing apparatuses 1A to 1C are by way of example of an information processing apparatus and each of them can communicate with server 2. When characteristics common to these are mentioned herein, they may also collectively be referred to as an "information processing apparatus 1." For an information processing apparatus belonging to the information terminal control system according to the present embodiment, a portable telephone, a smart phone (a high-function portable telephone), a television set incorporating an information processing function, a portable information processing apparatus, a stationary information processing apparatus, and the like can be adopted.

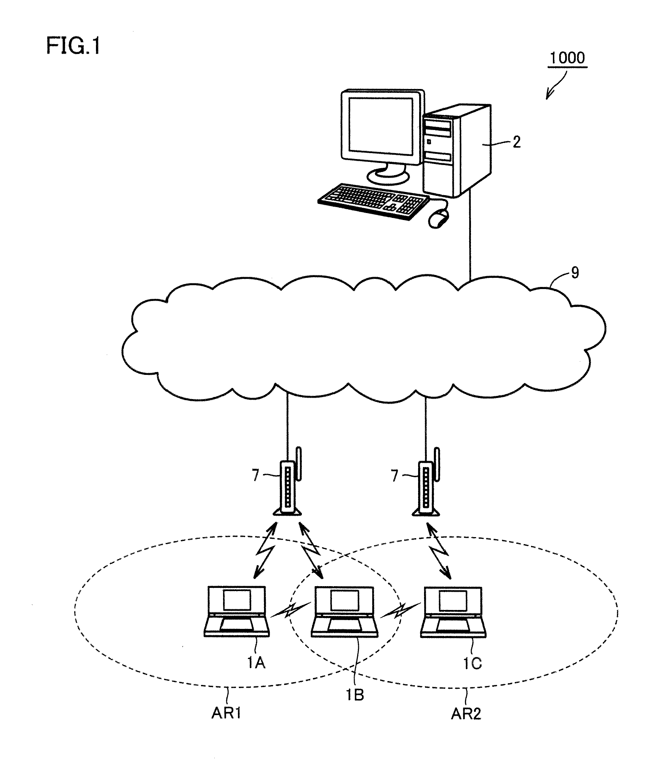

Fig. 1 is a diagram schematically showing a configuration of information terminal control system 1000 according to one embodiment. In information terminal control system 1000 shown in Fig. 1, information processing apparatus 1 can access server 2 through a network 9. Network 9 is represented, for example, by a wide area network (WAN) such as the Internet and a dedicated circuit, however, it is not limited thereto. More specifically, information processing apparatus 1 has a wireless communication function as will be described later, and it exchanges data with server 2 through an access point 7 electrically connected to network 9. Communication between information processing apparatus 1 and server 2 may be wired communication.

In the present embodiment, a communication manner in which information processing apparatus 1 communicates with server 2 through network 9 is referred to as "Internet communication". In addition, a communication manner in which information processing apparatuses 1 carry out direct wireless communication with each other without passing through network 9 is referred to as "local communication".

### [Hardware Configuration of Information Processing Apparatus]

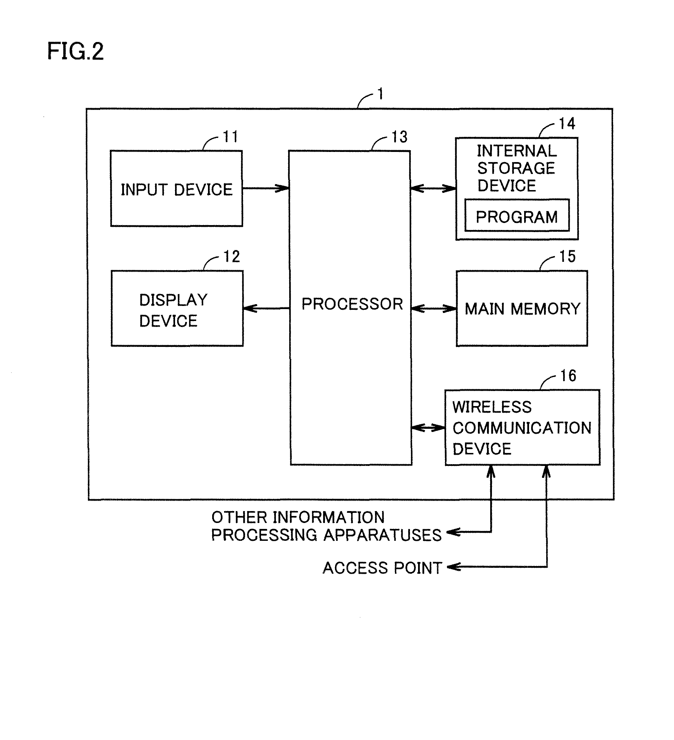

Fig. 2 is a block diagram of hardware of information processing apparatus 1 according to the present embodiment. As shown in Fig. 2, information processing apparatus 1 includes an input device 11, a display device 12, a processor 13, an internal storage device 14, a main memory 15, and a wireless communication device (wireless communication module) 16.

Input device 11 is operated by a user of information processing apparatus 1 and outputs to processor 13, a signal in response to a user's operation. Input device 11 is implemented, for example, by a cross-shaped switch, a push button, or a touch panel. Display device 12 displays an image on a screen. A displayed image includes, for example, at least one of an image generated in information processing apparatus 1 and an image transmitted from an external apparatus to information processing apparatus 1. Display device 12 includes such a known display device as a liquid crystal display device (LCD).

Processor 13 is operation processing means for executing a computer program.

Internal storage device 14 stores a computer program to be executed by processor 13. Internal storage device 14 also stores character information which will be described later. Internal storage device 14 is implemented, by way of example, by a NAND-type flash memory. A program to be executed by processor 13 may be stored in internal storage device 14 (from the time point of shipment or after shipment through communication with another piece of equipment) or may be stored in a recording medium attachable to and removable from a main body of information processing apparatus 1 (such as a universal serial bus (USB) memory).

Main memory 15 temporarily stores various types of data. Main memory 15 is implemented, by way of example, by a pseudo-SRAM (Static Random Access Memory) (PSRAM).

Wireless communication device 16 functions as an interface for communication with another information processing apparatus 1 through wireless communication. In addition, wireless communication device 16 also functions as an interface for communication with server 2 through access point 7.

### [Hardware Configuration of Server]

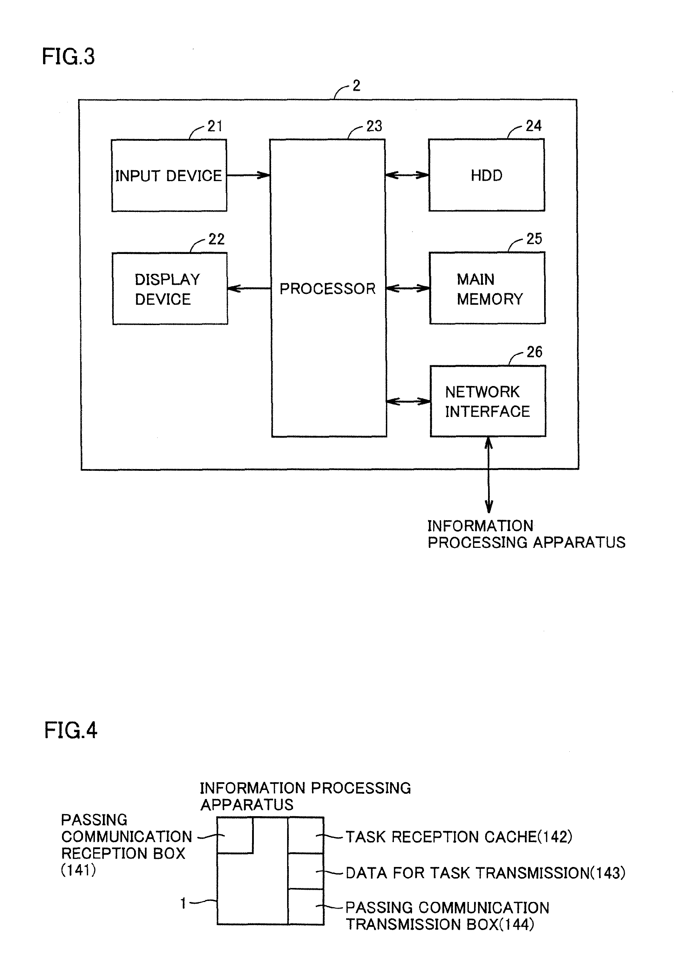

Fig. 3 is a block diagram of hardware of server 2. As shown in Fig. 3, server 2 includes an input device 21, a display device 22, a processor 23, a hard disk drive (HDD) 24, a main memory 25, and a network interface 26.

Input device 21 is operated by a user of server 2 and outputs to processor 23, a signal in response to a user's operation. Input device 21 is implemented, for example, by a keyboard or a mouse. Display device 22 displays an image on a screen and it is implemented, for example, by a liquid crystal display device (LCD).

Processor 23 is operation processing means for executing a computer program. HDD 24 stores a computer program to be executed by processor 23. The computer program includes a program for causing server 2 to function as a server apparatus.

Main memory 25 temporarily stores a computer program or information.

Main memory 25 is implemented, by way of example, by a PSRAM. Network interface 26 also functions as an interface for communication with information processing apparatus 1. Network interface 26 is implemented, for example, by a LAN card.

### [Internet Communication]

"Internet communication" which is a manner of communication between information processing apparatus 1 and server 2 will be described. In the "Internet communication", information processing apparatus 1 connects to access point 7 under a scheme complying, for example, with IEEE 802.11 and connects to network 9 through access point 7. Information processing apparatus 1 communicates with server 2 through network 9.

Processing for executing a task is exemplified as one example of processing for information processing apparatus 1 to communicate with server 2 through network 9. The task in the present embodiment refers to processing involving transmission and reception of prescribed data. More specifically, the task is categorized into two types of a "transmission task" and a "reception task" and they may also simply collectively be referred to as a "task" herein. Data indicating contents of the task includes information specifying a connection destination such as a URL of a server.

### [Local Communication]

"Local communication" which is a manner of communication between information processing apparatuses 1 will be described. In the present embodiment, information processing apparatus 1 can exchange data for application which can be made use of by a prescribed application program (such as a game application) through "local communication". "Local communication" refers to such communication that prescribed data ("character information" in the present embodiment) stored in internal storage device 14 is transmitted automatically (without a user's operation) to another information processing apparatus 1 present at a short distance and data for exchange stored in internal storage device 14 of another information processing apparatus 1 is received automatically (without a user's operation) from another information processing apparatus 1. It is noted that local communication is also referred to as passing communication in the present example.

More specifically, local communication is carried out by cooperation of processor 13, wireless communication device 16, and the like in information processing apparatus 1. This processing is processing performed as background processing, for example, while information processing apparatus 1 is in what is called a sleep state (which may also be referred to as a stand-by state). For example, during sleep, such control that wireless communication device 16 basically mainly operates and sleep of processor 13 is temporarily canceled as necessary so that processor 13 temporarily mainly operates is carried out (for example, processing for searching for another information processing apparatus 1 is performed by wireless communication device 16 and transmission and reception of data is carried out by processor 13). In addition, for example, information processing apparatus 1 may include, separately from processor 13, a second processor operable with low power consumption, and during sleep, the second processor may mainly operate. Moreover, local communication may be carried out as appropriate in response to a user's instruction operation or the like even when information processing apparatus 1 is not in a sleep state.

In local communication, for example, information processing apparatus 1 repeatedly searches for another unspecified information processing apparatus 1 present within coverage of near field communication. Then, information processing apparatus 1 automatically transmits character information to another information processing apparatus 1 which was found as a result of search, and automatically receives character information stored in internal storage device 14 of another information processing apparatus from that another information processing apparatus.

"Local communication" above is carried out, for example, at the time when users each carrying information processing apparatus 1 pass each other. The character information is generated prior to "local communication" based on a user's operation or the like and stored in advance in a prescribed area of internal storage device 14.

Fig. 1 shows an area AR1 and an area AR2 as an example of coverage of near field communication. Area AR1 shows coverage of near field communication of information processing apparatus 1A. Area AR2 shows coverage of near field communication of information processing apparatus 1C.

For example, when moving information processing apparatus 1B is located within area AR1, information processing apparatus 1A and information processing apparatus 1B carry out local communication. Thus, for example, character information is transferred from information processing apparatus 1A to information processing apparatus 1B. In addition, when area AR2 has moved to a position where information processing apparatus 1B is included owing to movement of information processing apparatus 1C, information processing apparatus 1B and information processing apparatus 1C carry out local communication. Thus, for example, the character information transferred from information processing apparatus 1A to information processing apparatus 1B is transferred from information processing apparatus 1B to information processing apparatus 1C.

### [Outlines of Processing of Application]

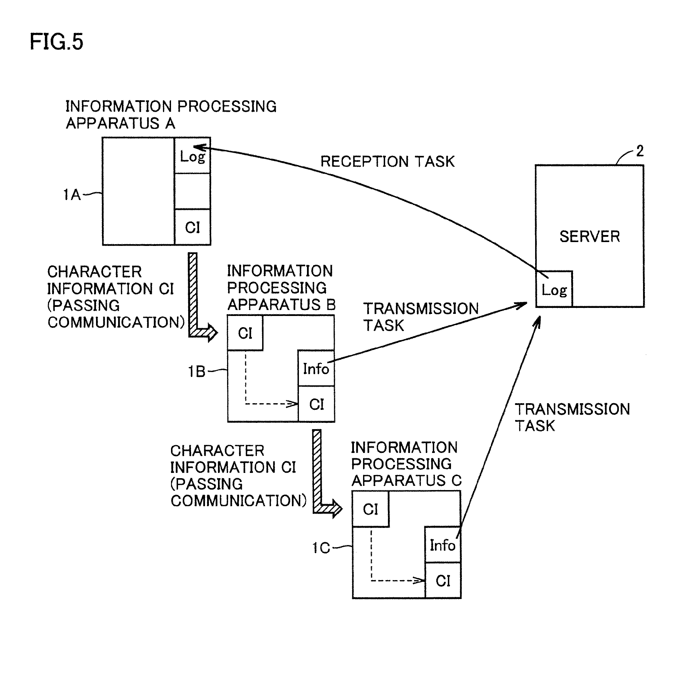

Outlines of processing of an application making use of character information transferred among a plurality of information processing apparatuses 1 will now be described with reference to Figs. 4 and 5. In the present embodiment, outlines of processing of a "game application" representing one example of an application using character information will be described.

Fig. 4 is a diagram schematically showing storage contents in a part of a storage area within information processing apparatus 1. The storage area is provided, for example, within internal storage device 14. Fig. 5 is a diagram showing outlines of processing of a game application relating to the present embodiment.

Referring first to Fig. 4, in the storage area within information processing apparatus 1, a reception box for passing 141, a task reception cache 142, an area for storing data for task transmission (hereinafter referred to as "data for task transmission") 143, and a transmission box for passing 144 are provided. Fig. 4 shows a quadrangle representing a storage area within information processing apparatus 1, shows reception box for passing 141 in the upper left of the quadrangle, and shows task reception cache 142, data for task transmission 143, and transmission box for passing 144 as aligned vertically in a descending order in a right portion of the quadrangle. Transmission box for passing 144 is a memory area in which data to be transmitted during passing communication is stored. Reception box for passing 141 is a memory area in which data received during passing communication is stored.

On the premise that information processing apparatus 1 has a memory structure as shown in Fig. 4, outlines of processing of a game application relating to the present embodiment will be described with reference to Fig. 5. Fig. 5 shows an information processing apparatus A to an information processing apparatus C, which correspond to information processing apparatus 1A to information processing apparatus 1C in Fig. 1, respectively. It is assumed that a game application is installed in each of information processing apparatuses A to C. Fig. 5 further shows server 2. In a game application according to the present embodiment, for example, "character information" generated in information processing apparatus A is successively transferred to other information processing apparatuses (information processing apparatuses B, C) through passing communication. Thus, such a presentation that a character expressed by character information sequentially travels information processing apparatuses A, B, C can be realized. Thus, zest of the game application can be enhanced.

The "character information" in the present embodiment includes at least identification information (a terminal ID) for identifying information processing apparatus 1 in which the character information has been generated and information representing characteristics for each character (parameter information). The "character information" may include information representing the number of times of transmission (transfer) (the number of times of movement). The character information may be generated by the game application or by another application.

In Fig. 5, initially, character information ("CI" in Fig. 5) is generated in information processing apparatus A and stored in transmission box for passing 144. Thereafter, as passing communication is carried out, the character information moves from information processing apparatus A to information processing apparatus B. Thus, the character information is moved to reception box for passing 141 of information processing apparatus B.

Thereafter, when the game application is executed in information processing apparatus B, the character information is moved within information processing apparatus B, from reception box for passing 141 to an area where processing data of the game application is to be stored (hereinafter referred to as a "work area"). During movement, when the "character information" includes "the number of times of movement," information processing apparatus B updates the character information such that a prescribed value is added to "the number of times of movement." Namely, information processing apparatus 1B updates by increment, "the number of times of movement," as the character information is received.

Information processing apparatus B can further update parameter information included in the character information received from information processing apparatus A (such as an "experience parameter" which will be described later). The experience parameter represents one example of parameter information. Information processing apparatus B updates parameter information, for example, in response to a user's operation. Contents of update of the parameter information are changed, for example, in accordance with contents of the user's operation. More specifically, magnitude of a value by which parameter information is to be changed is determined in accordance with the contents of the user's operation.

Then, information processing apparatus B generates information for transmission ("Info" in Fig. 5) for transmitting updated character information to server 2 and causes the information to be stored in data for task transmission 143. In addition, information processing apparatus B generates and registers also a "transmission task" for transmitting "Info" to server 2 at appropriate timing. Consequently, a "transmission task" is executed at appropriate timing. Thus, "Info" is transmitted from information processing apparatus B to server 2. Server 2 accumulates "Info" transmitted from information processing apparatus B.

Then, passing communication takes place between information processing apparatus B and information processing apparatus C, so that the character information moves from transmission box for passing 144 of information processing apparatus B to reception box for passing 141 of information processing apparatus C. The character information moved here is character information updated in information processing apparatus B after it moved from information processing apparatus A to information processing apparatus B. Passing communication may take place before or after transmission of "Info" from information processing apparatus B to server 2.

Depending on contents of processing of the game application in information processing apparatus B, the character information may be moved (transferred) from information processing apparatus B to information processing apparatus C without change in value for parameter information.

In information processing apparatus C, when the game application is executed, the character information transmitted from information processing apparatus B is moved from reception box for passing 141 to a work area. When the character information includes "the number of times of movement," information processing apparatus C updates the character information such that a prescribed value is added to the "number of times of movement" with such movement.

Thereafter, in information processing apparatus C, after the character information is updated in accordance with the contents of processing of the game application, it is moved to transmission box for passing 144. Then, likewise information processing apparatus B, information processing apparatus C generates "Info" and a transmission task and transmits the character information to server 2. In addition, as a result of passing communication between information processing apparatus C and another information processing apparatus, the character information is transferred to another information processing apparatus.

Thus, the character information generated in information processing apparatus A is successively transferred to other information processing apparatuses through passing communication. In addition, information processing apparatuses B, C which have received the character information transmit "Info" to server 2 as appropriate. On the other hand, information processing apparatus A obtains "Log" accumulated in server 2. "Log" refers to Info corresponding to each information processing apparatus itself, of "Info" accumulated in server 2. Information processing apparatus A generates a "reception task" in order to obtain "Log" and receives "Log" at appropriate timing.

Information processing apparatus A can display how the character information generated and transmitted by information processing apparatus A has been changed through transfer, by making use of "Log".

### [Outlines of Communication Between Apparatuses]

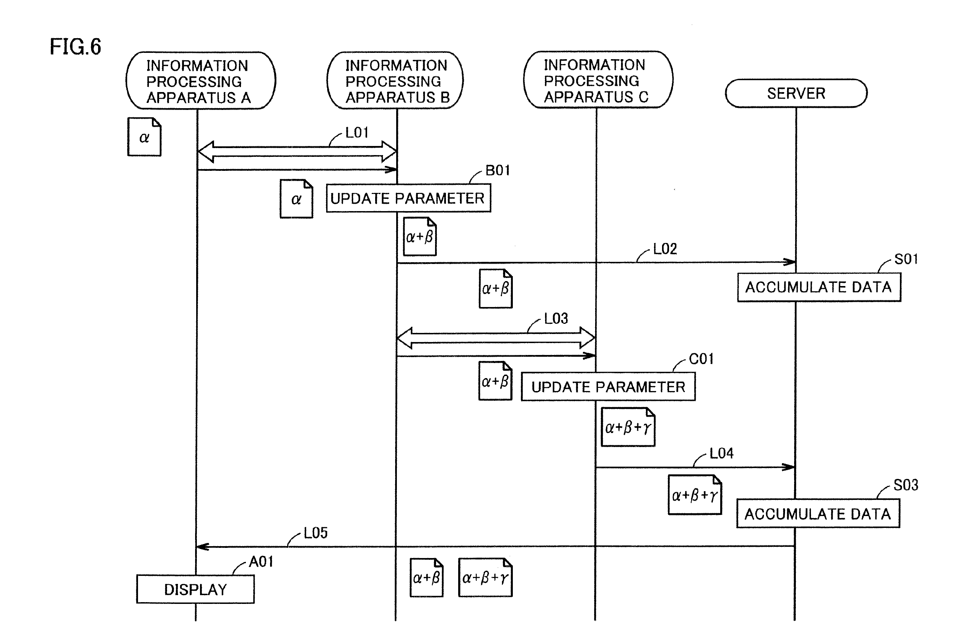

Outlines of processing for communication between apparatuses in the information terminal control system will be described with reference to Fig. 6. Fig. 6 is a timing chart of processing in each apparatus in information terminal control system 1000. In Fig. 6, information processing apparatuses 1A to 1C are expressed as information processing apparatuses A to C, respectively.

Initially, as shown with an arrow L01 in Fig. 6, passing communication between information processing apparatus 1A and information processing apparatus 1B is carried out. Thus, character information is transmitted from information processing apparatus 1A to information processing apparatus 1B. A state of parameter information in the character information transmitted this time is a state generated in information processing apparatus 1A. "α" in Fig. 6 represents a state of parameter information at this time.

Then, in step B01, information processing apparatus 1B updates the parameter information in the character information transmitted from information processing apparatus 1A. In Fig. 6, a state of the parameter information after update in information processing apparatus 1B is represented by "α+β". Fig. 6 expresses update of the character information in information processing apparatus 1B as addition of "β" to the character information. Information processing apparatus 1B transmits the character information corresponding to "α+β" to server 2 through the Internet communication (an arrow L02). The character information is accumulated in server 2 (step S01).

Thereafter, as shown with an arrow L03 in Fig. 6, passing communication between information processing apparatus 1B and information processing apparatus 1C is carried out. Thus, the character information corresponding to "α+β" is transmitted from information processing apparatus 1B to information processing apparatus 1C.

Then, in step C01, information processing apparatus 1C updates the parameter information in the character information transmitted from information processing apparatus 1B. Fig. 6 shows a state of the parameter information after update in information processing apparatus 1C as "α+β+γ". Fig. 6 expresses update of the character information in information processing apparatus 1C by addition of "γ" to the character information. Information processing apparatus 1C transmits the character information corresponding to "α+β+γ" to server 2 through the Internet communication (an arrow L04). The character information is accumulated in server 2 (step S03).

The character information accumulated in server 2 is transmitted to information processing apparatus 1 in which the character information has been generated. In the example in Fig. 6, character information corresponding to each of "α+β" and "α+β+γ" is transmitted from server 2 to information processing apparatus 1A (an arrow L05).

In step A01, information processing apparatus 1A performs display processing making use of the received character information. In step A01, display making use of the character information represented by "α+β" and display making use of the character information represented by "α+β+γ" may separately be provided or display based on combination of such character information may be provided.

It is noted that, in a case where information processing apparatus 1B is disabled from communicating with server 2 or the like, the character information may be transmitted from information processing apparatus 1C to server 2 (arrow L04) before the character information is transmitted from information processing apparatus 1B to server 2 (arrow L02). Thus, in transmission of the character information from server 2 to information processing apparatus 1A (arrow L05), there may be a case where only the character information corresponding to "α+β+γ" is transmitted.

Thereafter, when information processing apparatus 1B is now able to communicate with server 2, the character information may be transmitted from information processing apparatus 1B to server 2 after the character information is transmitted from information processing apparatus 1C to server 2 (arrow L04). Thus, there may be a case where server 2 transmits to information processing apparatus 1A, the character information transmitted from information processing apparatus 1B after the character information transmitted from information processing apparatus 1C.

In the processing described with reference to Fig. 6, information processing apparatus 1A transmits only the character information generated in information processing apparatus 1A. It is noted that, likewise information processing apparatuses 1B, 1C, information processing apparatus 1A can also receive character information generated in another information processing apparatus 1 and can also transmit the received character information to another information processing apparatus 1. Thus, since character information generated in another information processing apparatus 1 can be transmitted, opportunities for data communication increase and zest of data communication can be enhanced.

Furthermore, in the processing described with reference to Fig. 6, information processing apparatus 1 (information processing apparatus 1B, information processing apparatus 1C) performs a set of processing consisting of update of the character information received from another information processing apparatus 1 and transmission of updated character information to yet another information processing apparatus 1. Then, each time information processing apparatus 1 performs the set of processing once, it transmits updated character information to server 2. It is noted that transmission of updated character information to server 2 may be withheld until the set of processing is performed a prescribed number of times. For example, information processing apparatus 1 may generate a transmission task for transmitting updated character information to server 2 on condition that the set of processing was performed twice.

### [Processing for Communication Between Apparatuses]

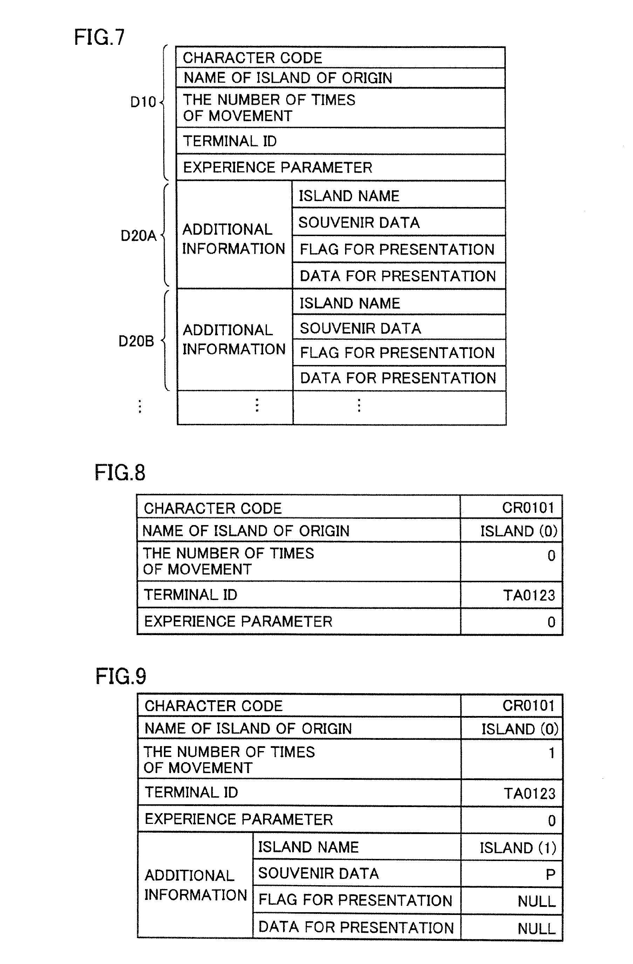

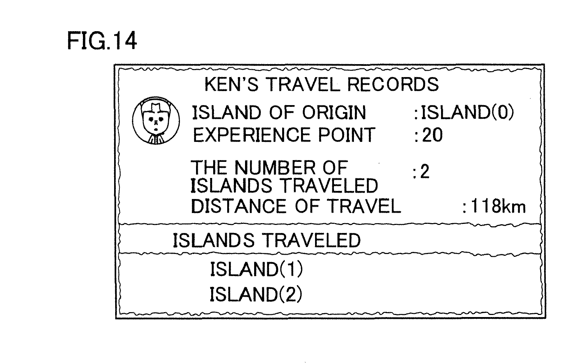

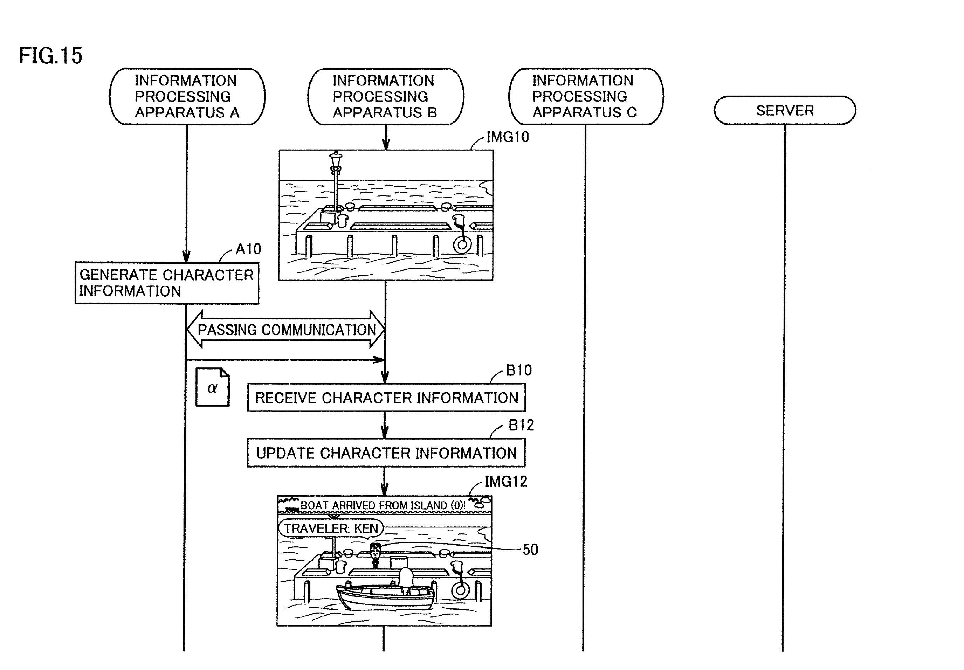

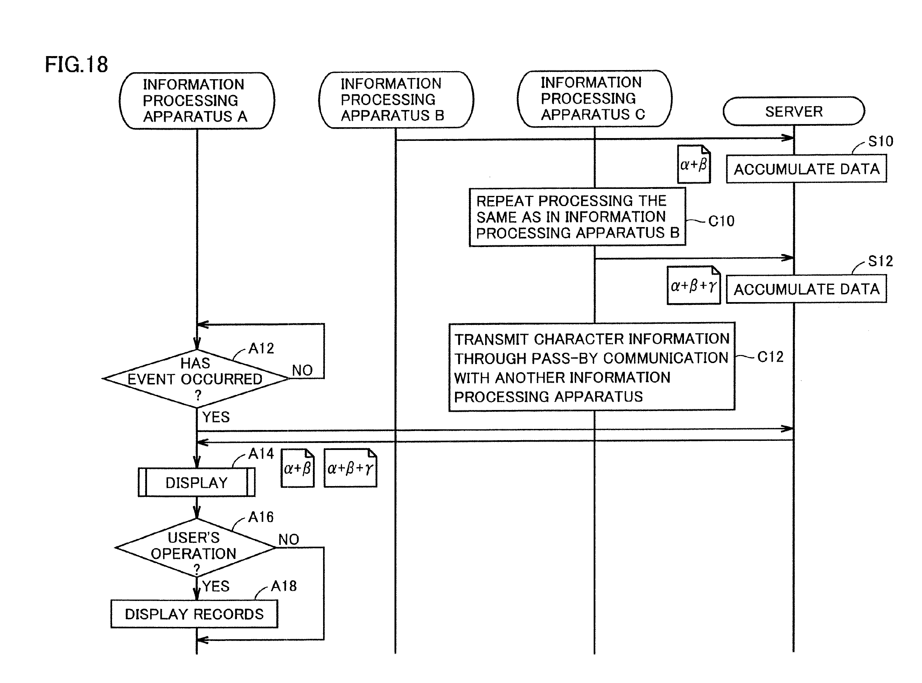

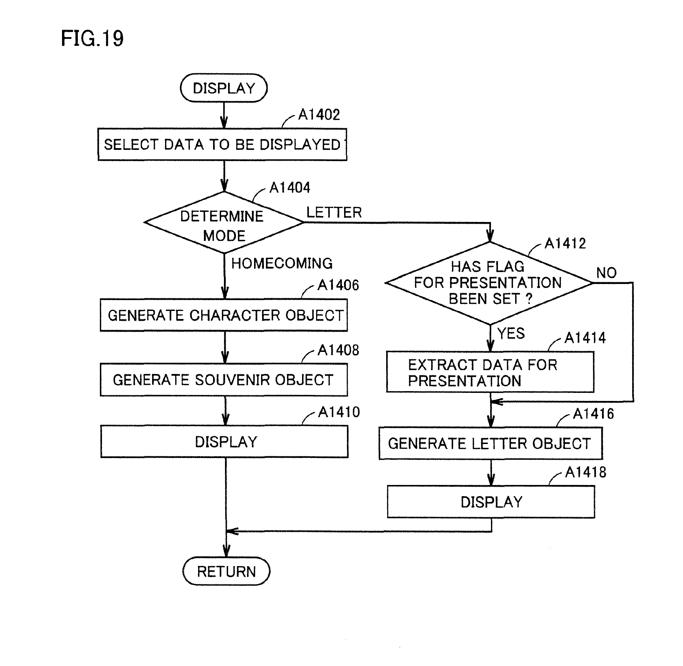

Contents of processing for communication between apparatuses in information terminal control system 1000 will now be described more specifically with reference to Figs. 7 to 19. Figs. 7 to 13 are diagrams showing specific examples of character information. Fig. 14 is a diagram showing one example of a screen displayed based on the character information. Figs. 15 to 18 are timing charts in the communication processing. Fig. 19 is a flowchart of a sub routine of step A14 in Fig. 18.

Fig. 7 shows a general configuration of character information. The character information includes basic information D10 and additional information D20A, D20B ... Basic information D10 is a basic portion of the character information. Additional information D20A, D20B ... is information added in information processing apparatus 1 which is a transfer destination of the character information. Additional information D20A, D20B ... may also collectively be referred to as additional information D20.

Basic information D10 includes at least a character code, the number of times of movement, a terminal ID, an experience parameter, and a name of an island of origin. The character code refers to data specifying appearance in a case where a character corresponding to character information is displayed. For example, in a case where a character looks like a person, the character code is information specifying a color of eyes, a hairstyle, and the like. Information processing apparatus 1 can refer to information bringing a character code in correspondence with an object (such as a table). Thus, each information processing apparatus 1 can display an object corresponding to the character code (such as a character 50 which will be described later) if it obtains the character code. Information bringing a character code in correspondence with an object may be stored in internal storage device 14 or the like of each information processing apparatus 1 or may be stored in a storage device on a network accessible by processor 13. The information is common to information processing apparatuses 1 belonging to information terminal control system 1000.

The number of times of movement refers to information representing the number of times of transfer of character information. When parameter information in the character information is updated once, a value for the number of times of movement is updated by increment, for example, by "1".

The terminal ID refers to identification information provided specifically for each information processing apparatus, and here, it refers to information specifying information processing apparatus 1 which has generated the character information.

The experience parameter refers to information of which value is changed in accordance with contents of processing in a game application in information processing apparatus 1. Depending on contents of processing in the game application, a value for an experience parameter may increase, decrease, or remain unchanged when the parameter information is updated.

Each information processing apparatus 1 stores, for example, a name of information processing apparatus 1 input by the user. A name of an island of origin is a name of information processing apparatus 1 which has generated the character information.

Each piece of additional information D20 includes at least a name of an island, souvenir data, a flag for presentation, and data for presentation. A name of an island is a name of information processing apparatus 1 which is a transfer destination. Souvenir data is data representing a "souvenir" made use of in processing which will be described later. A flag for presentation is a flag regarding presentation of specific contents. Data for presentation is data made use of for presentation. The flag for presentation and the data for presentation are information generated in accordance with contents of processing in the game application in information processing apparatus 1 which is a transfer destination.

For example, character information generated in information processing apparatus 1A includes only basic information D10. As a result of update in information processing apparatus 1B, additional information D20A is added to the character information. Thereafter, the character information is transferred to information processing apparatus 1C and updated in information processing apparatus 1C, so that additional information D20B is further added to the character information.

Referring to Fig. 15, in step A10, information processing apparatus 1A generates character information. Fig. 8 shows one example of the generated character information.

In the character information shown in Fig. 8, "CR0101" is set as one example of a value for a character code, "island (0)" is set as one example of a value for a name of an island of origin, "0" is set as one example of a value for the number of times of movement, "TA0123" is set as one example of a value for a terminal ID, and "0" is set as one example of a value for an experience parameter. The value for a terminal ID "TA0123" is a value specifying information processing apparatus 1A.

Then, information processing apparatus 1A transmits the character information to information processing apparatus 1B through passing communication with information processing apparatus 1B. In response thereto, information processing apparatus 1B receives the character information in step B10.

The game application of information processing apparatus 1B in Fig. 15 causes a screen, for example, as shown with a screen IMG10, to be displayed until information processing apparatus 1B receives character information from other information processing apparatuses 1 including information processing apparatus 1A. Screen IMG10 shows a dock where nobody is present, which represents one example of a display screen showing a stand-by state in the game application.

When information processing apparatus 1B receives the character information from information processing apparatus 1A (step B10), information processing apparatus 1B moves the character information received in step B10 from reception box for passing 141 to the work area.

Thereafter, information processing apparatus 1B updates the character information transmitted from information processing apparatus 1A in accordance with contents of processing by the game application (step B12). Fig. 9 shows one example of the updated character information. As compared with Fig. 8, a value for the number of times of movement of the character information in Fig. 9 has been incremented by 1 and additional information including an island name "island (1)" has been added to the character information. The additional information includes the island name "island (1)", souvenir data having a value "P", and a flag for presentation and data for presentation each having a value "NULL". The value "P" for the souvenir data indicates a souvenir of the island corresponding to information processing apparatus 1B (such as a specific type of food). The flag for presentation and the data for presentation will be described later.

Then, the game application of information processing apparatus 1B causes, for example, a screen IMG12 to be displayed. Screen IMG 12 shows a scene that character 50 who was put on board a boat from another island has arrived at the dock. Character 50 corresponds to the character code "CR0101" and a traveler named "Ken".

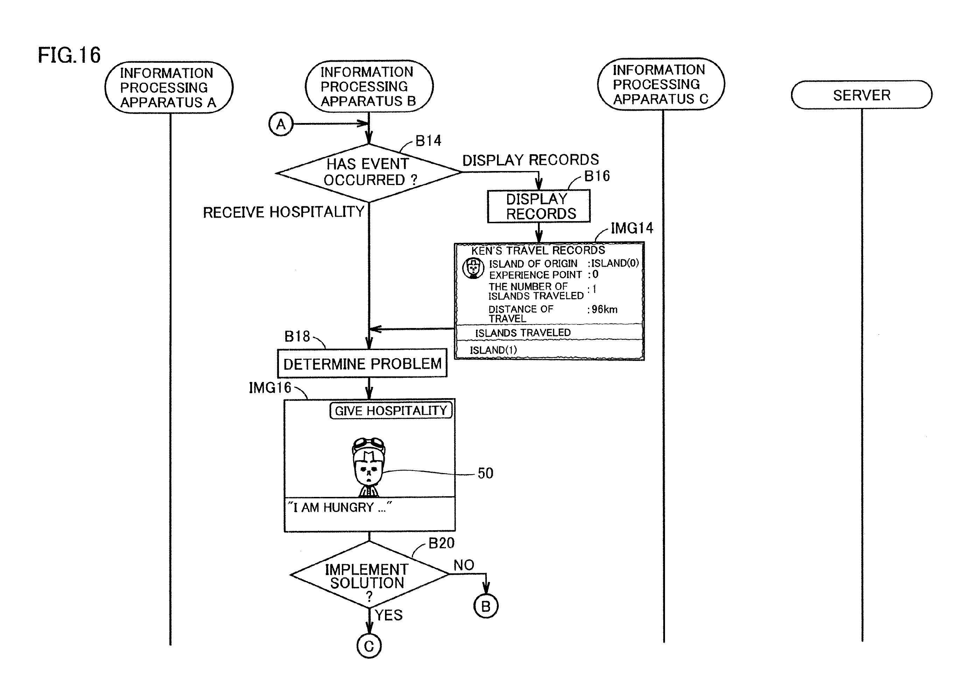

Referring to Fig. 16, in step B14, information processing apparatus 1B stands by until occurrence of an event "record display" or an event "receive haspitality". When the event "record display" occurs, control proceeds to step B16. When the event "receive haspitality" occurs, control proceeds to step B18. The event occurs, for example, based on a user's operation.

In step B16, information processing apparatus 1B displays records of a character in character information. A screen IMG14 represents one example of a screen showing records. Since received progress records of a character can be checked, zest of data communication can be enhanced. Screen IMG 14 includes, together with a title "Ken's travel records", an "island of origin" having a value "island (0)" and an "experience point" having a value "0". The "island of origin" is a name of an island of origin in the character information. The "experience point" is a value for an experience parameter of the character information. Names of information processing apparatuses 1A, 1B, 1C herein are defined as "island (0)", "island (1)", and "island (2)", respectively.

Screen IMG14 further includes "the number of islands traveled" having a value "1" and a "distance of travel" having a value "96 km". "The number of islands traveled" refers, for example, to the number of times of movement in the character information. The "distance of travel" refers, for example, to a length of a line connecting position information of each information processing apparatus 1 to which the character information has been transferred, in the order of transfer of the character information. In information terminal control system 1000, each information processing apparatus 1 may specify position information based on a name of an island of each information processing apparatus 1. In addition, character information may include information specifying position information of an island, separately from a name of each island (an island of origin or a name of an island in additional information). The position information may be information representing a location (such as a name of a prefecture) or may be represented by a plane coordinate. It is noted that a value for a distance of travel may be a product of a value for the number of times of movement and a given unit distance.

Screen IMG 14 further has a field of an "island traveled". The field displays "island (1)". The field displays a name of information processing apparatus 1 registered as an island name in "additional information".

In step B18, information processing apparatus 1B determines contents of a problem of a character which will be made use of for presentation, among contents registered in advance. Then, in step B18, information processing apparatus 1B provides such presentation display that the character confides a problem having determined contents, as shown in a screen IMG16. In screen IMG16, character 50 confides its problem of hunger.

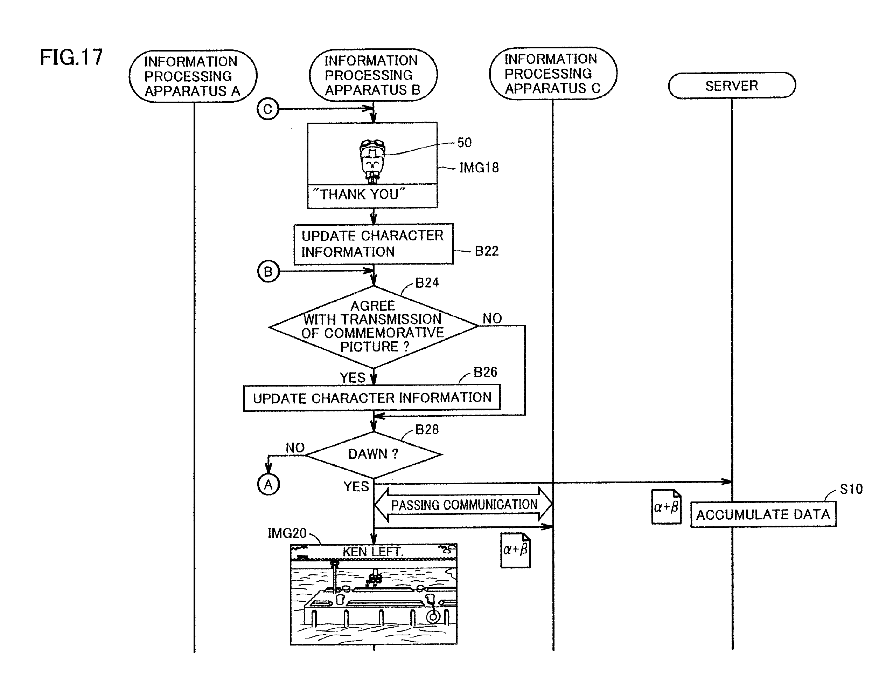

In step B20, information processing apparatus 1B determines whether or not an event which occurred subsequent to display in step B18 indicates implementation of a solution of the problem. When an event "to solve the problem" occurs, for example, a screen IMG18 (Fig. 17) is displayed and thereafter control proceeds to step B22 (Fig. 17). Screen IMG18 shows presentation display that food is given to the character in order to solve the problem of "hunger".

On the other hand, when an event "not to solve the problem" occurs, control proceeds from step B20 to step B24. The event "to solve the problem" and the event "not to solve the problem" both occur based, for example, on a user's operation.

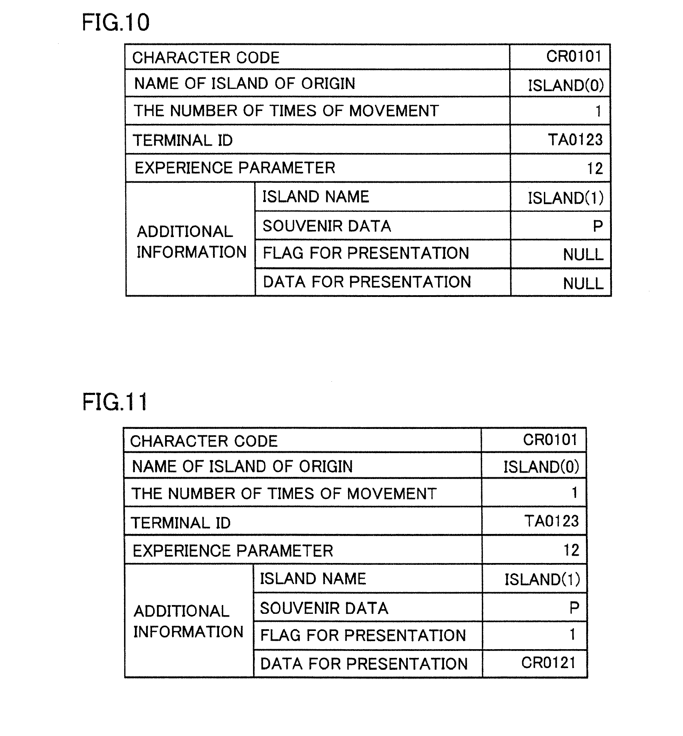

In step B22, information processing apparatus 1B updates the character information. Fig. 10 shows one example of updated character information. As compared with Fig. 9, the character information shown in Fig. 10 has a value for the "experience parameter" incremented by "12". Thereafter, control proceeds to step B24. The "experience parameter" may be subtracted by updating.

In step B24, information processing apparatus 1B detects whether or not an operation indicating agreement with transmission of a commemorative picture has been performed. As the premise for step B24, for example, the game application in information processing apparatus 1B requests the user to perform an operation to input "whether or not he/she agrees with transmission of a commemorative picture." When an operation indicating agreement is performed, control proceeds to step B26, and when an operation indicating disagreement is performed, control proceeds to step B28.

In step B26, as shown in Fig. 11, values for the flag for presentation and the data for presentation are each updated and control proceeds to step B28. A value "1" is set as a value for the flag for presentation. For the value for the data for presentation, a character code of the character generated, for example, in information processing apparatus 1B (in the example in Fig. 11, a value "CR0121") is set.

In step B28, information processing apparatus 1B stands by from reception of character information in step B10 until dawn breaks. "Dawn breaks" means, for example, that the time kept by a timer has passed a specific time (for example, midnight). When dawn breaks, information processing apparatus 1B prepares for next passing communication. "Prepare" here includes movement of updated character information (Fig. 11) from the work area to transmission box for passing 144 and generation of a transmission task for transmission of the character information to server 2. Server 2 accumulates the received character information (step S10).

Thereafter, information processing apparatus 1B transmits the updated character information to information processing apparatus 1C as it carries out passing communication with information processing apparatus 1C. Here, the game application of information processing apparatus 1B causes, for example, a screen IMG20 to be displayed. Screen IMG20 shows a scene that character 50 which arrived at the island in screen IMG12 (Fig. 15) is put on board a boat and leaves the island.

It is noted that the game application may provide presentation display that character 50 is caused to stand at the dock after it determines that the dawn broke and until information processing apparatus 1B carries out passing communication with another information processing apparatus 1. This presentation display can encourage the user of information processing apparatus 1B to soon terminate such a state that character 50 stands alone at the dock, and thus the user can be invited to carry out passing communication of information processing apparatus 1B with another information processing apparatus 1.

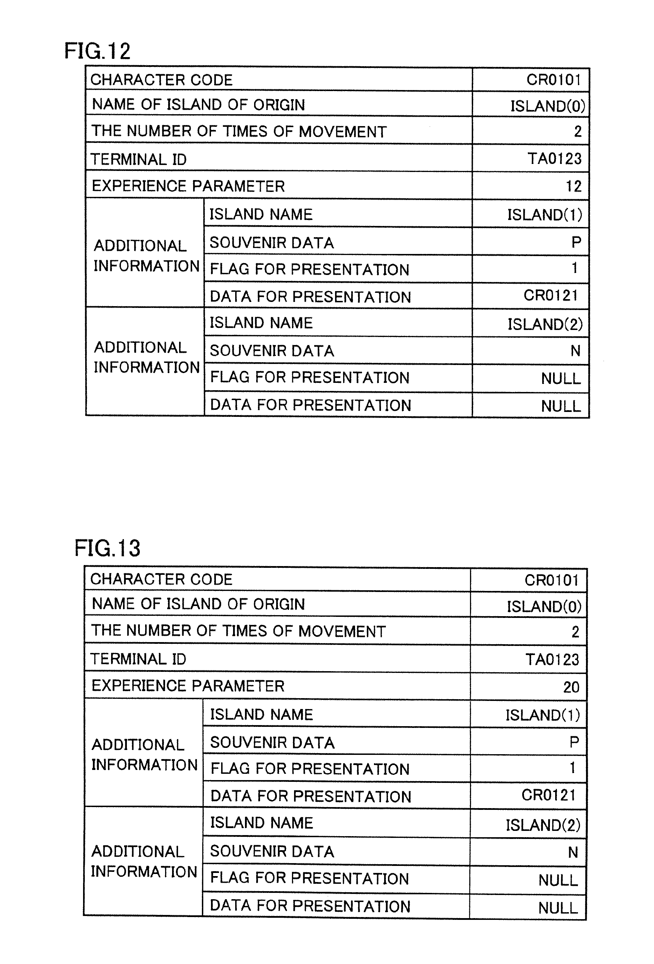

In step C10, information processing apparatus 1C receives the character information from information processing apparatus 1B, and thereafter it performs processing (step B10 to step B28) the same as that performed by information processing apparatus 1B which received the character information from information processing apparatus 1A (step C10). The character information is updated also in information processing apparatus 1C as in information processing apparatus 1B. Then, information processing apparatus 1C transmits the updated character information to server 2, and in step C12, it transmits the updated character information to another information processing apparatus 1 through passing communication. In accordance with a state of communication in information processing apparatus 1C, information processing apparatus 1C may transmit the updated character information (see Fig. 13 which will be described later) to server 2 and thereafter transmit the same to another information processing apparatus 1, or vice versa. When server 2 receives the character information from information processing apparatus 1C, it accumulates the character information (step S12).

Update of character information in information processing apparatus 1C will be described with reference to Figs. 11 to 13. Initially, the character information (Fig. 11) transmitted from information processing apparatus 1B has the number of times of movement incremented by "1" as shown in Fig. 12, and additional information "island (2)" is added to the character information. A value "TA0125N" for souvenir data in additional information expressed as island (2) is a value which is combination of a value "TA0125" representing information processing apparatus 1C and a value "N" representing position information of information processing apparatus 1C. Values for the flag for presentation and the data for presentation are each set to "NULL".

When solution of the problem is implemented in information processing apparatus 1C, a value for an experience parameter is incremented by 8 as shown in Fig. 13 and it has increased to "20".

Whether or not to update values for the flag for presentation and the data for presentation is determined based on contents of an operation as to whether or not to agree with transmission of a commemorative picture in the game application, as described as step B24. In the present embodiment, in information processing apparatus 1B, an operation indicating agreement with transmission of a commemorative picture has been performed. Therefore, in update of the character information in information processing apparatus 1B, values for the flag for presentation and the data for presentation have been changed. It is assumed that, in information processing apparatus 1C, an operation indicating disagreement with transmission of a commemorative picture has been performed. Thus, in the updated character information in information processing apparatus 1C, values for the flag for presentation and the data for presentation remain as NULL, as shown in Fig. 13.

On the other hand, information processing apparatus 1A stands by until an event of reception of character information accumulated in server 2 occurs in step A12. Then, when the event occurs in information processing apparatus 1A, information processing apparatus 1A requests server 2 to transmit the character information in information processing apparatus 1A. The request includes transmission, for example, of the terminal ID of information processing apparatus 1A itself and the time when the character information has previously been obtained from server 2 (the time of previous obtainment). In response, server 2 transmits the character information of information processing apparatus 1A (the character information in which a value for a terminal ID is the value "TA0123" representing information processing apparatus 1A) to information processing apparatus 1A.

Server 2 has accumulated the character information (Fig. 11) transmitted from information processing apparatus 1B and the character information (Fig. 13) transmitted from information processing apparatus 1C (steps S10, S12). Server 2 transmits to information processing apparatus 1A, the entire character information of information processing apparatus 1A, of the character information accumulated in server 2 after the time of previous obtainment, in response to the request from information processing apparatus 1A. Namely, the character information transmitted from information processing apparatus 1B and the character information transmitted from information processing apparatus 1C are transmitted to information processing apparatus 1A.

Then, in step A14, information processing apparatus 1A performs display processing with the use of the character information received from server 2. Contents of processing in step A14 will be described later with reference to Figs. 19 to 25. The process proceeds to step A16. In step A16, information processing apparatus 1A stands by until a user's operation for displaying records of a character is performed. When the user's operation is performed, information processing apparatus 1A causes control to proceed to step A18. In step A18, information processing apparatus 1A displays records of a character. Fig. 14 shows one example of a screen of records displayed in step A18. When information processing apparatus 1A receives two or more pieces of character information from server 2, it makes use of character information greatest in the number of times of movement among them, to thereby create the screen in Fig. 14. More specifically, when Fig. 11 and Fig. 13 are compared with each other, the character information shown in Fig. 13 is greater in the number of times of movement. Therefore, information processing apparatus 1A makes use of the character information shown in Fig. 13 to thereby create the screen in Fig. 14.

The screen in Fig. 14 includes items similar to those in screen IMG14 in Fig. 16. It is noted that, referring to Figs. 14 and 16, increase in value for an experience point by "20" in the screen in Fig. 14 is based on increase in value for the experience parameter by "12" in information processing apparatus 1B and increase by "8" in information processing apparatus 1C. The reason why the number of islands traveled increased by "1" in the screen in Fig. 14 is because the character information was transmitted to information processing apparatus 1B and thereafter it was further transmitted to information processing apparatus 1C. In the screen in Fig. 14, the distance of travel increased by 22 km as compared with screen IMG14 in Fig. 16. This distance is, for example, a distance from a position specified by position information of information processing apparatus 1B to a position specified by position information of information processing apparatus 1C.

In addition, in the screen in Fig. 14, "island (1)" and "island (2)" are exemplified as islands traveled. Moreover, in the screen in Fig. 14, a region to which each island belongs (position information) is also shown together. Namely, where the character information has moved can be identified based on records of a character and hence zest of data communication can be enhanced.

In the processing described above with reference to Figs. 15 to 18, when information processing apparatus 1 receives character information from another information processing apparatus 1, it updates the number of times of movement in the character information and adds additional information to the character information.

### [Display Processing (Step A14)]

Fig. 19 is a flowchart of a sub routine of step A14. Referring to Fig. 19, information processing apparatus 1A selects in step A1402, character information to be displayed and control proceeds to step A1404. More specifically, when information processing apparatus 1A receives two or more pieces of character information from server 2, it selects character information to be displayed from among the two or more pieces of character information under a given condition. The condition here is exemplified, for example, by character information most recent among the two or more pieces of character information.

In step A1404, information processing apparatus 1A determines a mode of display of character information. In the present embodiment, two types of display manners of "homecoming" and "letter" are prepared as display modes. When determination as a "homecoming" mode is made, control proceeds to step A1406. When determination as a "letter" mode is made, control proceeds to step A1412. In step A1404, information processing apparatus 1A selects one manner of presentation out of two manners of presentation, such that, for example, each time processing shown in Fig. 19 is performed, each of "homecoming" and "letter" is executed at a ratio set in advance. For example, in a case where a ratio of "homecoming" is set to 1/3 and a ratio of "letter" is set to "2/3", when the processing in Fig. 19 is performed 15 times, presentation of "homecoming" is selected approximately 5 times and presentation of "letter" is selected approximately 10 times.

It is noted that, in information processing apparatus 1A, a maximum value for the number of times of movement of the character information received so far may be stored. In such a case, when a value for the number of times of movement of the character information selected in step A1402 is smaller than the stored maximum value, the character information selected in step A1402 is not the character information updated in a most recent transfer destination. Therefore, in such a case, information processing apparatus 1A preferably selects in step A1404, "letter" as a display mode without exception. In step A1406, information processing apparatus 1A generates a character object (character 50) and control proceeds to step A1408. Character 50 is an object corresponding to a character code "CR0101".

A character object is generated mainly based on a value for a character code. It is noted that a character object may be changed in accordance with the number of times of movement. For example, a color of clothing worn by a character is changed in accordance with the number of times of movement. Thus, zest of passing communication (data communication) can be enhanced.

In the present embodiment, additional information (island (1), island (2), ...) added to character information in each information processing apparatus 1 makes up record information showing progress records, i.e., which information processing apparatus 1 has received character information. In addition, the number of times of movement constitutes record information similarly to additional information (island (1), island (2), ...). Then, a character object may be subject to change in color of clothing worn by the character in accordance with the number of pieces of record information instead of the number of times of movement (for example, the number of pieces of "souvenir data" in the character information).

In step A1408, information processing apparatus 1A generates a souvenir object and control proceeds to step A1410. The souvenir object refers, for example, to local specialties of a character's destination. A type of the souvenir object is determined based on souvenir data ("P" of island (1), "N" of island (2)) in the character information. When a plurality of pieces of souvenir data are included in the character information selected as an object to be displayed in step A1402, a souvenir object corresponding to partial souvenir data therein may be generated or souvenir objects corresponding to the entire souvenir data may be generated.

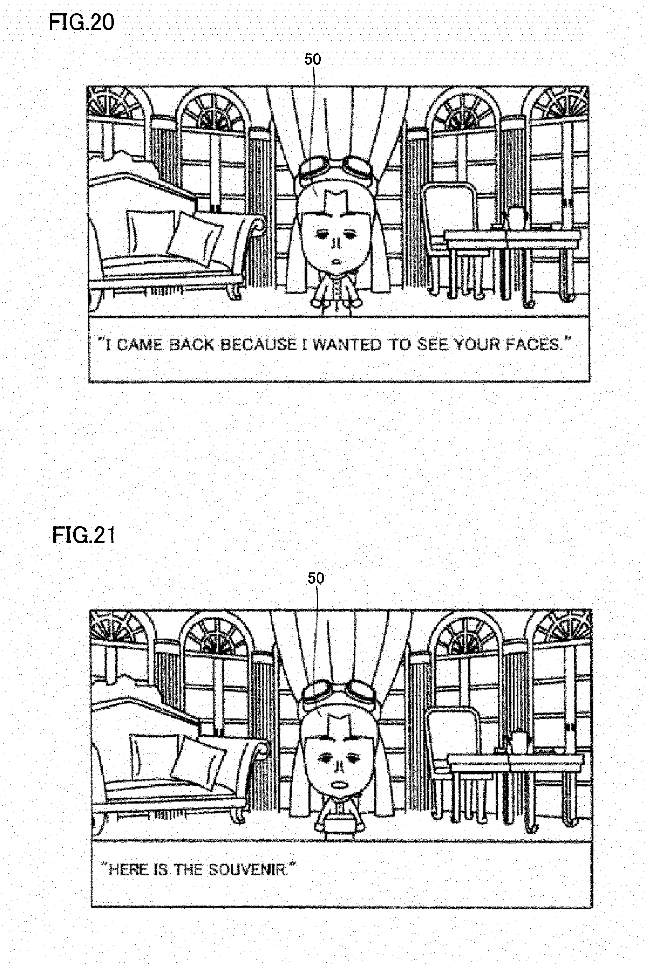

In step A1410, information processing apparatus 1A displays a screen generated by making use of the character object generated in step A1406 and the souvenir object generated in step A1408. Display contents in step A1410 will be described with reference to Figs. 20 to 22.

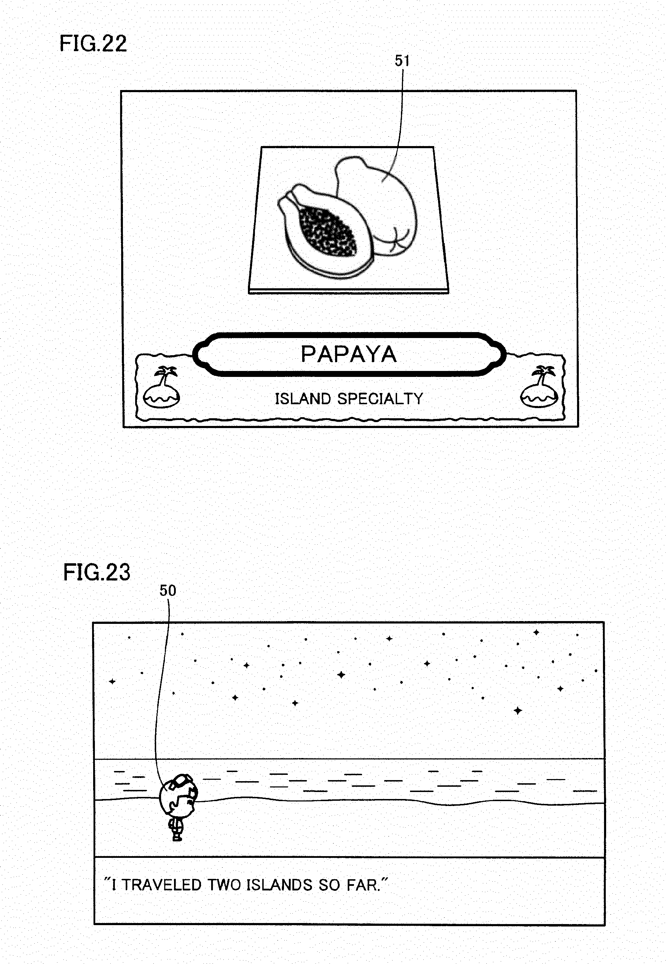

In step A1410, initially, a screen shown in Fig. 20 is displayed. The screen shown in Fig. 20 shows a scene that a traveler (character 50) tells a player (the user of information processing apparatus 1A) that he/she came back to his/her country (came home). This scene corresponds to the fact that the character corresponding to the character information generated in information processing apparatus 1A has returned to information processing apparatus 1A. Then, a screen shown in Fig. 21 is displayed. The screen shown in Fig. 21 shows a scene that character 50 hands a souvenir to the user. Then, a screen shown in Fig. 22 is displayed. The screen shown in Fig. 22 is a screen introducing a souvenir 51. Souvenir 51 in Fig. 22 is a souvenir object generated in step A1408. Fig. 22 shows a "papaya" by way of example of a souvenir.

Referring back to Fig. 19, in step A1412, information processing apparatus 1A determines whether or not a value "1" is set for at least one flag for presentation in the character information. When the value "1" is set for at least one flag for presentation, control proceeds to step A1414. When a value is not set for any flag for presentation (all NULL), control proceeds to step A1416.

In step A1414, data for presentation is extracted from the character information (Fig. 11 or Fig. 13) selected as an object to be displayed in step A1402 and control proceeds to step A1416.

In step A1416, information processing apparatus 1A generates a letter object and control proceeds to step A1418.

In step A1418, information processing apparatus 1A displays the letter object generated in step A1416.

One example of a letter object displayed in step A1418 will be described with reference to Figs. 23 to 25. The letter object includes two parts. Fig. 23 shows a first part. A screen in Fig. 23 shows a message that "I traveled two islands so far," together with a scene that character 50 reverts while he/she walks along the coast. The number of islands included in the message is, for example, equal to the number of times of movement of the character information.

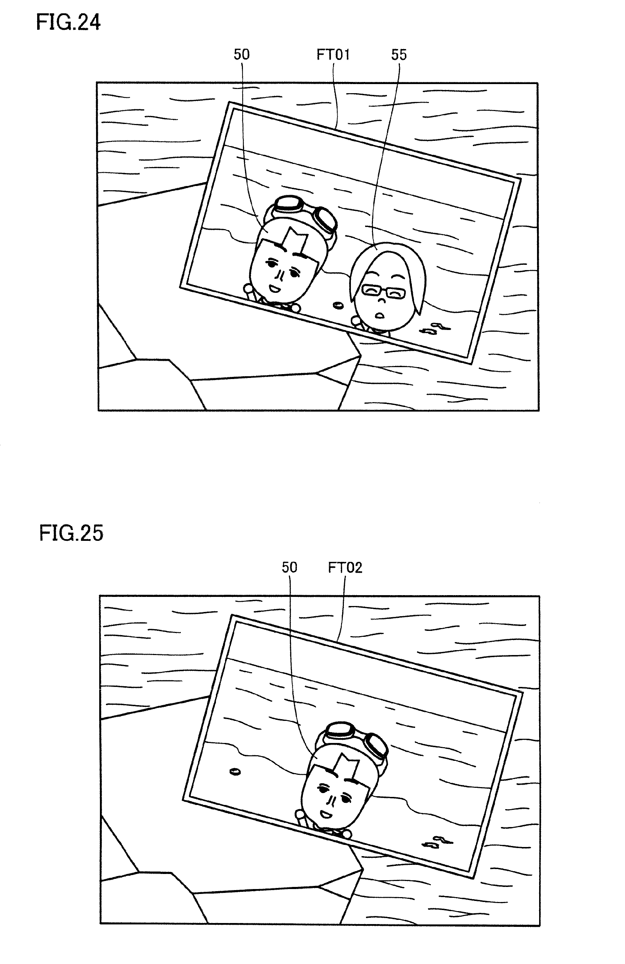

Fig. 24 shows one example of a second part and shows a scene that a photograph FT01 is taken out of an envelope. Photograph FT01 includes character 50 and a character 55. Character 50 corresponds to the character code "CR0101" " generated in information processing apparatus 1A. Character 55 corresponds to data for presentation (a character code) extracted in step A1414. A letter displayed in this example includes a commemorative picture in which character 50 generated in information processing apparatus 1A is photographed together with character 55 generated in another information processing apparatus 1 (information processing apparatus 1B).

Fig. 25 shows another example of the second part and shows a scene that a photograph FT02 is taken out of an envelope. Photograph FT02 includes only character 50.

Whether or not a photograph displayed in the second part includes a character generated in another information processing apparatus 1 is determined based on a manner of update of character information in another information processing apparatus 1. More specifically, as described with reference to steps B24, B26 in Fig. 17, it is determined based on whether or not an operation indicating agreement with transmission of a commemorative picture has been performed in information processing apparatus 1 which is a transfer destination of the character information. When such an operation has been performed, a value "1" is set for a flag for presentation in the character information and the character information is updated such that data for presentation is added. When an operation indicating disagreement with transmission of a commemorative picture has been performed in information processing apparatus 1 which is a transfer destination of the character information, the character information is transmitted to server 2 and further to information processing apparatus 1A while values for the flag for presentation and the data for presentation each remain as "NULL".

In the present embodiment, character information includes a flag for presentation for each piece of additional information. It is noted that only one flag for presentation may be included commonly to every additional information in the character information. In this case, information processing apparatus 1 which is a transfer destination of character information sets a value for the common flag for presentation to 1 or NULL, depending on contents of an operation indicating agreement/disagreement with transmission of a commemorative picture. In step A1412, when a value for the common flag for presentation is set to 1, control proceeds to step A1414, and when it is set to NULL, control proceeds to step A1416.

In the present embodiment described above, each of the processing for "homecoming" described with reference to Figs. 20 to 22 and the processing for "letter" described with reference to Figs. 23 to 25 can be one example of display processing making use of an object. In the processing for "homecoming", position information such as "P" functions as display identification information specifying contents of a souvenir. In the processing for "letter", data for presentation of character information functions as display identification information specifying contents of a character photographed together with character 50 generated in information processing apparatus 1A.

In the present embodiment, an information processing apparatus can change character information received between apparatuses and thereafter transmit the resultant information to another information processing apparatus through passing communication. Then, the character information changed in another information processing apparatus can be received through a server and then displayed. Namely, since display processing based on parameter information changed in another information processing apparatus is performed in an information processing apparatus, zest of data communication can be enhanced.

Though an experience parameter in character information is changed in information processing apparatus 1 which is a transfer destination in the present embodiment, a character code may further be changed. For example, in a case where a game application performs processing for changing a color of hairs of a character in information processing apparatus 1 which is a transfer destination (travel destination), the character information is updated such that a value of a portion of the character code corresponding to the color of hairs of the character is changed.

### [Outlines of Communication Among Apparatuses in Apparatus Rejection Setting]

In the above, a case where "character information" is successively transferred to other information processing apparatuses through passing communication and parameter information is changed in information terminal control system 1000 has been described as processing for communication among apparatuses.

On the other hand, it is also possible that a certain information processing apparatus does not desire reception of "character information" from a prescribed information processing apparatus. For example, there is a case where, when always the same "character information" is received through passing communication with a prescribed information processing apparatus, rejection of reception of data from that apparatus is desired. Alternatively, it is also possible that, when unpleasant "character information" has been received from a prescribed information processing apparatus, rejection of reception of data from that apparatus is desired.

In this regard, such setting that reception of data from the prescribed information processing apparatus is rejected can be made. Namely, reception of data from a prescribed information processing apparatus can be rejected.

For example, in a case where such setting for rejection of reception from a prescribed information processing apparatus is made, however, passing communication is not carried out and an opportunity for communication processing is missed. Thus, it becomes difficult to continually propagate data to other information processing apparatuses. In addition, in a case of such specifications that data is discarded in a reception apparatus in which rejection of reception has been set, propagation of data may be stopped by that apparatus.

On the other hand, instead of rejection of processing for communication with the prescribed information processing apparatus, the user is not notified of received data (for example, data not displayed by way of example) but the received data is transmitted to another information processing apparatus. Simply by doing so, data can continually be propagated to another information processing apparatus without an opportunity for communication processing in passing communication being missed. In addition, data can continually be propagated without propagation of data being stopped.

A scheme for passing communication in an information processing apparatus having a function to allow setting for rejection of execution of display processing (a function for apparatus rejection setting) based on data received from a prescribed information processing apparatus will be described below.

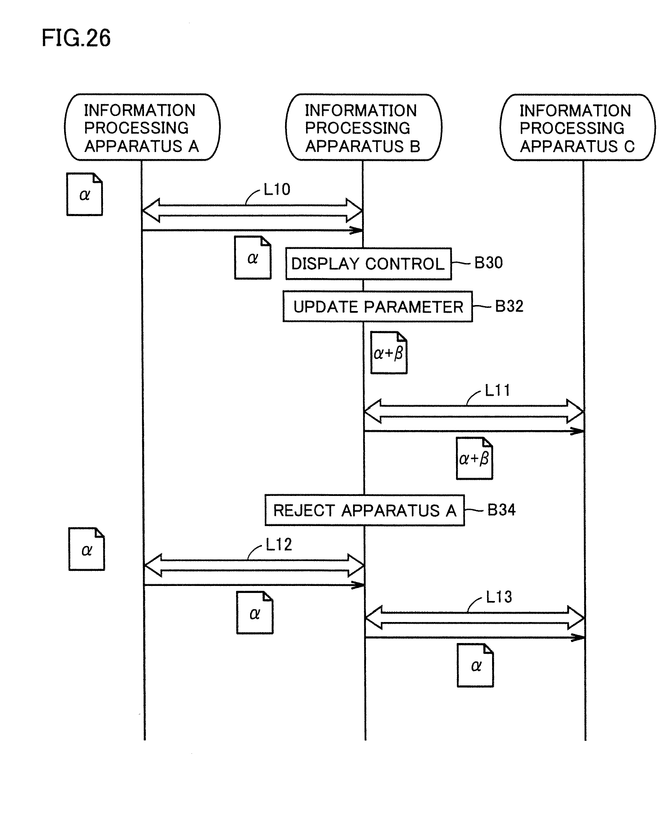

Fig. 26 is a diagram illustrating outlines of processing for communication among apparatuses each having the function for apparatus rejection setting in the information terminal control system.

Referring to Fig. 26, a timing chart of processing in each apparatus in information terminal control system 1000 is shown. Here, information processing apparatuses 1A to 1C are expressed as information processing apparatuses A to C, respectively.

Initially, a case where information processing apparatus 1B does not reject information processing apparatus 1A with the function for apparatus rejection setting will be described. This case is similar to the case described above, and here, as shown with an arrow L10, passing communication between information processing apparatus 1A and information processing apparatus 1B is carried out. Character information is transmitted from information processing apparatus 1A to information processing apparatus 1B. A state of parameter information in character information transmitted this time is a state in information processing apparatus 1A. "α" in the figure represents a state of parameter information at this time.

Then, in step B30, information processing apparatus 1B carries out display control of the character information transmitted from information processing apparatus 1A. Namely, display processing based on the received data (character information) is performed.

Then, in step B32, information processing apparatus 1B updates the parameter information. Here, a state of the parameter information after update in information processing apparatus 1B is represented by "α+β". Update of the character information in information processing apparatus 1B is expressed as addition of "β" to the character information.

Thereafter, as shown with an arrow L11, passing communication between information processing apparatus 1B and information processing apparatus 1C is carried out. Thus, the character information corresponding to "α+β" is transmitted from information processing apparatus 1B to information processing apparatus 1C.

Then, a case where information processing apparatus 1B rejects in step B34, information processing apparatus 1A with the function for apparatus rejection setting ("reject apparatus A") will be described.

In the present embodiment, even when information processing apparatus 1B rejects information processing apparatus 1A with the function for apparatus rejection setting, as shown with an arrow L12, passing communication between information processing apparatus 1A and information processing apparatus 1B is carried out. Namely, regardless of whether or not information processing apparatus 1B has made setting for rejecting information processing apparatus 1A with the function for apparatus rejection setting, character information is transmitted from information processing apparatus 1A to information processing apparatus 1B.

Then, information processing apparatus 1B receives the character information transmitted from information processing apparatus 1A, however, with the function for apparatus rejection setting, it does not carry out display control of the character information transmitted from information processing apparatus 1A. Namely, display processing based on the received data (character information) is not performed. In addition, parameter information is not updated either. Namely, the state of the parameter information maintains the state of "α".

Then, as shown with an arrow L13, passing communication between information processing apparatus 1B and information processing apparatus 1C is carried out. Thus, the character information in which the state of the parameter information above maintains "α" is transmitted from information processing apparatus 1B to information processing apparatus 1C. Namely, when information processing apparatus 1B rejects information processing apparatus 1A with the function for apparatus rejection setting, it transmits (transfers) the character information transmitted from information processing apparatus 1A as it is to information processing apparatus 1C.

In the present embodiment, when setting for rejection of an information processing apparatus is made with the function for apparatus rejection setting, regardless of whether or not an information processing apparatus which is a communication counterpart is a rejected apparatus, passing communication is carried out. Then, when the communication counterpart is the rejected apparatus, display processing based on received data is not performed but received data is transmitted (transferred) as it is through passing communication with another information processing apparatus. Namely, processing for communication with the apparatus rejected with the function for apparatus rejection setting is not rejected but the received data is transmitted (transferred) to another information processing apparatus with the user being not notified of the received data (for example, the received data being not displayed by way of example). With the processing, data can continually be propagated to another information processing apparatus without an opportunity for communication processing in passing communication being missed, and therefore opportunities for data communication increase and zest of data communication can be enhanced. In addition, since data can continually be propagated without propagation of the data being stopped, zest of data communication can be enhanced.

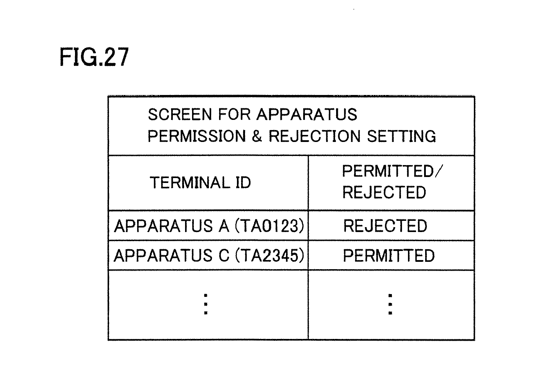

Fig. 27 is a diagram illustrating one example of a screen for apparatus rejection setting based on the function for apparatus rejection setting.

Referring to Fig. 27, a screen for apparatus rejection setting displayed on display device 12 of information processing apparatus 1 is shown. The setting screen is provided to be displayed based on a user's operation or the like through input device 11. In the setting screen, a screen in which setting for rejecting execution of display processing based on data received from a corresponding information processing apparatus for each terminal ID which is identification information provided specifically for each information processing apparatus can be made is shown. Here, the screen is provided such that the user can select through input device 11, any one of permission/rejection of execution of display processing for an apparatus corresponding to a terminal ID, in the screen for apparatus rejection setting. An application program implementing the function for apparatus rejection setting may be contained in a game application or may be contained in a computer program contained in internal storage device 14.

Specifically, a case where "apparatus A (terminal ID 0123)" has been set to be "rejected" with regard to execution of display processing based on data received from that apparatus is shown. In addition, a case where "apparatus C (terminal ID 2345)" has been set to be "permitted" with regard to execution of display processing based on data received from that apparatus is shown.

It is noted that it is assumed that a terminal ID is displayed based on communication records of an information processing apparatus which performed communication processing in the past. It is assumed that the communication records are stored in internal storage device 14. In addition, here, though not only a terminal ID but also an apparatus name ("apparatus A") are formally displayed for easily specifying an information processing apparatus, such display does not have to be provided in particular. In addition, without being limited to an apparatus name ("apparatus A"), for example, a user name can also be displayed in order to easily specify a corresponding apparatus.

In the present example, though a screen in which "permitted" or "rejected" can be set is illustrated by way of example in connection with execution of display processing relating to all information processing apparatuses based on communication records of information processing apparatuses which performed communication processing in the past, any scheme can be adopted for display or setting of the screen. For example, a scheme for selecting and setting only a terminal ID for which execution of display processing is to be "rejected" based on the communication records can be adopted, or conversely, a scheme for selecting and setting only a terminal ID which is to be "permitted" can also be adopted.

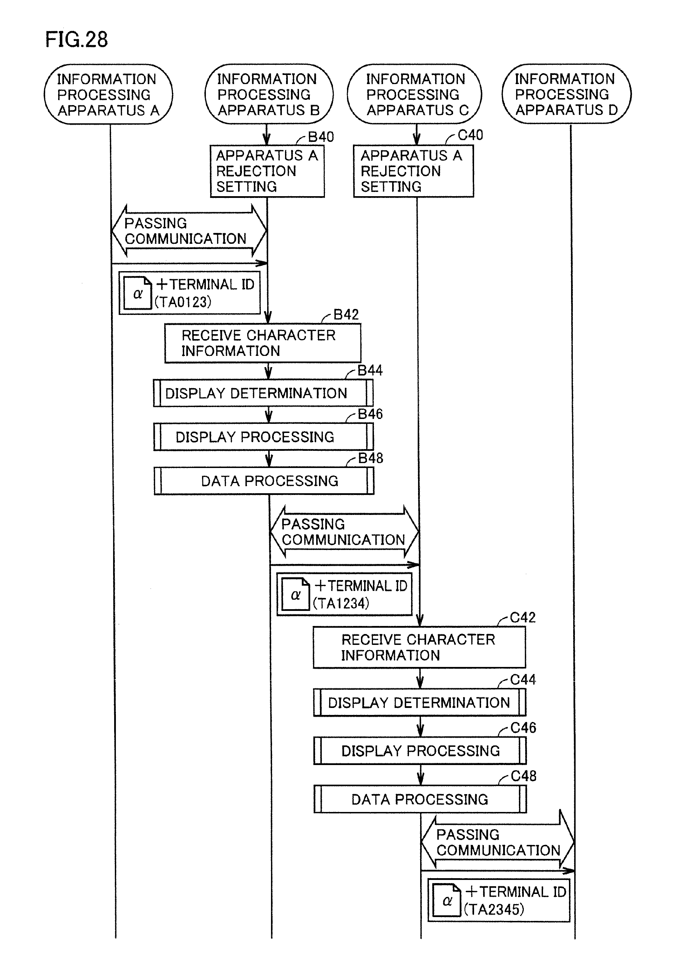

Fig. 28 is a diagram illustrating a specific example of a timing chart in processing for communication among apparatuses each having the function for apparatus rejection setting. Here, a timing chart of processing in each apparatus in information terminal control system 1000 is shown. Information processing apparatuses 1A to 1C are expressed as information processing apparatuses A to C, respectively. In addition, an information processing apparatus D is shown as a different information processing apparatus.

Referring to Fig. 28, in step B40, information processing apparatus B makes setting for rejecting information processing apparatus A ("apparatus A rejection setting") based on the function for apparatus rejection setting. Similarly, in step C40, information processing apparatus C makes setting for rejecting information processing apparatus A ("apparatus A rejection setting") based on the function for apparatus rejection setting.

In spite of the rejection setting above in information processing apparatus B, information processing apparatus A transmits data including the character information above to information processing apparatus B through passing communication with information processing apparatus B. Accordingly, in step B42, information processing apparatus B receives the data including the character information. Specifically, the data is stored in reception box for passing 141 of information processing apparatus B. It is noted that, in the present embodiment, transmitted and received data includes also a terminal ID specifying an information processing apparatus transmitting the character information, together with the character information. Then, when a game application is executed in information processing apparatus B, information processing apparatus B moves data from reception box for passing 141 to a work area and performs in step B44 display determination processing for determining whether or not to perform display processing. Details of display determination processing will be described later.

Then, in step B46, based on determination in step B44, information processing apparatus B performs display processing based on the received data. Details of display processing will be described later.

Then, in step 48, information processing apparatus B performs prescribed data processing on the received data. Details of data processing will be described later.

Then, information processing apparatus B transmits the data to information processing apparatus B through passing communication with information processing apparatus C. Accordingly, in step C42, information processing apparatus C receives the data including the character information above. Specifically, the data is stored in reception box for passing 141 of information processing apparatus C.

Thereafter, likewise information processing apparatus B, information processing apparatus C performs display determination processing (step C44), display processing (step C46), and data processing (step C48).

Then, information processing apparatus C transmits the data to information processing apparatus D through passing communication with information processing apparatus D. Then, similar processing is performed also in information processing apparatus D.

With the processing, data can continually be propagated to other information processing apparatuses.

Each processing will specifically be described below.

### [Flow of Display Determination Processing]

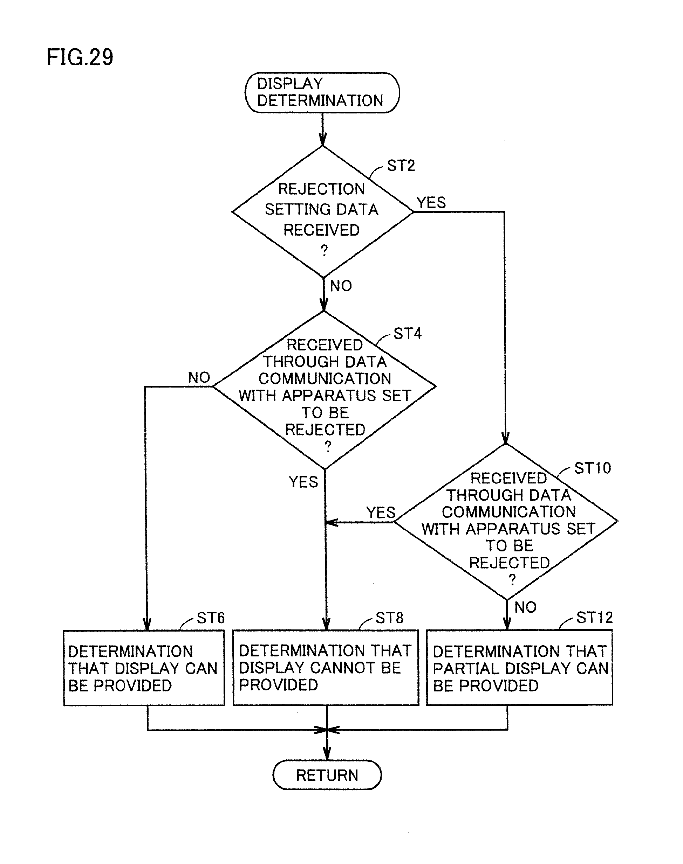

Fig. 29 is a flowchart illustrating a sub routine of the display determination processing performed in each information processing apparatus.

Referring to Fig. 29, an information processing apparatus determines whether or not it has received data for which rejection setting has been made (also referred to as rejection setting data) (step ST2). Here, the rejection setting data means data relating to an information processing apparatus for which rejection setting based on the function for apparatus rejection setting has been made. Specifically, by way of example, when a terminal ID which is identification information corresponding to an information processing apparatus for which rejection setting has been made is included in character information, the data is rejection setting data.

When it is determined in step ST2 that rejection setting data has not been received (NO in step ST2), whether or not data has been received through data communication with an apparatus for which rejection setting has been made (also referred to as an apparatus set to be rejected) (step ST4).

Specifically, by way of example, when a terminal ID corresponding to an information processing apparatus for which rejection setting has been made is not included in the character information of the received data, whether or not data has been received through data communication with an information processing apparatus for which rejection setting has been made based on the function for apparatus rejection setting is determined.

Then, when it is determined that data has been received through data communication with the apparatus set to be rejected (YES in step ST4), it is determined that display cannot be provided (step ST8). Then, the sub routine processing ends (return).

In this case, even in a case where a terminal ID corresponding to an information processing apparatus for which rejection setting has been made is not included in the character information of data, when the data is received from the apparatus set to be rejected, it is determined that display cannot be provided. This is because, even though the character information itself of the data is not to be rejected, it is the data received from the apparatus set to be rejected and therefore it is not preferred to provide display to the user, as data received from that apparatus.

On the other hand, when it is determined in step ST2 that rejection setting data has been received (YES in step ST2), whether or not data has been received through data communication with an apparatus for which rejection setting has been made (also referred to as an apparatus set to be rejected) is determined (step ST10).

Specifically, by way of example, when a terminal ID corresponding to an information processing apparatus for which rejection setting has been made is included in the character information of the received data, whether or not data has been received through data communication with an information processing apparatus for which rejection setting has been made based on the function for apparatus rejection setting is determined.

Then, when it is determined that data has been received through data communication with the apparatus set to be rejected (YES in step ST10), it is determined that display cannot be provided (step ST8). Then, the sub routine processing ends (return).

In this case, since the character information itself is to be rejected and it is also data received from the apparatus set to be rejected, it is not preferred to provide display to the user.

On the other hand, when it is determined in step ST10 that data has not been received through data communication with the apparatus set to be rejected (NO in step ST10), it is determined that partial display can be provided (step ST12). Then, the sub routine processing ends (return).

In this case, even though a terminal ID corresponding to an information processing apparatus for which rejection setting has been made is included in the character information of data, when data has not been received from the apparatus set to be rejected, it is determined that partial display can be provided. Even though the character information itself should be rejected, it is not data received from the apparatus set to be rejected and hence data received from that apparatus may be displayed differently from display based on the character information.

Alternatively, when it is determined in step ST4 that data has not been received through data communication with the apparatus set to be rejected (NO in step ST4), it is determined that display can be provided (step ST6). Then, the sub routine processing ends (return).

In this case, the character information itself is not to be rejected nor is data received from the apparatus set to be rejected, and hence display to the user can be provided.

### [Flow of Display Processing]

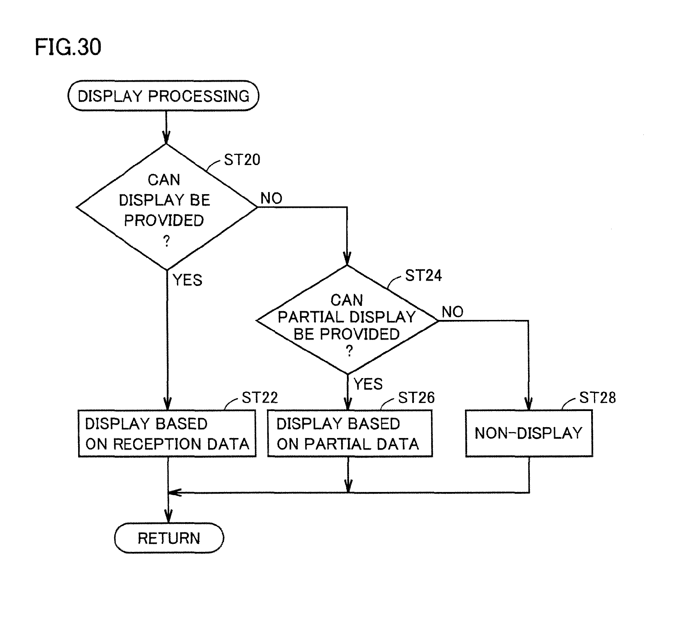

Fig. 30 is a flowchart illustrating a sub routine of the display processing performed in each information processing apparatus.

As shown in Fig. 30, an information processing apparatus determines whether or not determination in the display determination processing indicates that display can be provided (step ST20).

When it is determined in step ST20 that display can be provided (YES in step ST20), display based on reception data is provided (step ST22).

Specifically, by way of example, display processing based on character information in the received data is performed. Then, the sub routine processing ends (return).

When it is determined in step ST20 that display cannot be provided (NO in step ST20), whether or not determination in the display determination processing indicates that partial display can be provided (step ST24).

When it is determined in step ST24 that partial display can be provided (YES in step ST24), display processing based on partial data of reception data is performed (step ST26).

Specifically, by way of example, without using character information in the received data, display processing based on a terminal ID which is identification information corresponding to an information processing apparatus which has carried out transmission and which is data other than the character information in the received data is performed. Then, the sub routine processing ends (return).

When it is determined in step ST24 that partial display cannot be provided (NO in step ST24), display is not provided, without performing display processing (step ST28). Then, the sub routine processing ends (return).

### [Flow of Data Processing]

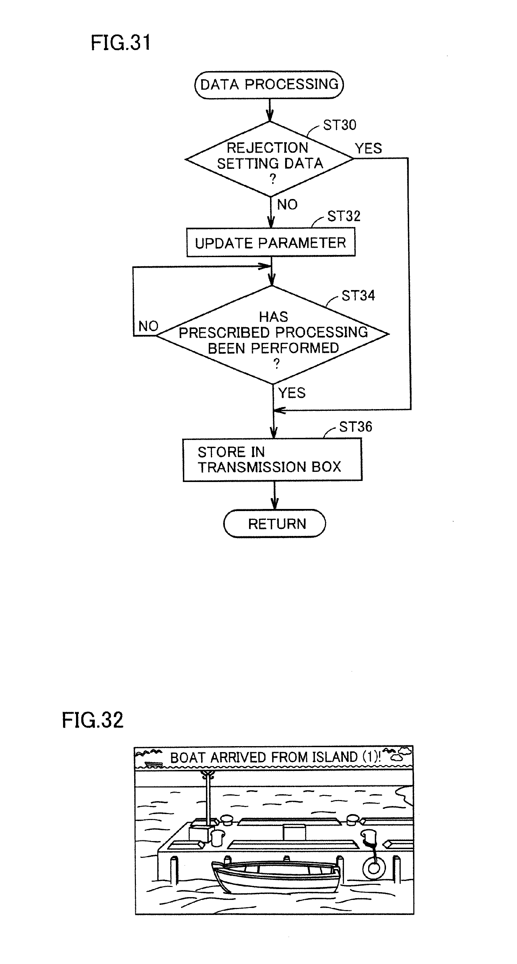

Fig. 31 is a flowchart illustrating a sub routine of the data processing performed in each information processing apparatus.

As shown in Fig. 31, an information processing apparatus determines whether or not received data is rejection setting data (step ST30). Specifically, by way of example, whether or not the data is data including in the character information, a terminal ID which is identification information corresponding to an information processing apparatus for which rejection setting has been made is determined. When a terminal ID which is identification information corresponding to an information processing apparatus for which rejection setting has been made is included in the character information as described above, the data is rejection setting data.

When it is determined in step ST30 that the data is not rejection setting data (NO in step ST30), a parameter is updated (step ST32). Namely, processing for updating parameter information which is processing for editing data described above is performed. For example, the state "α" of the parameter information is updated to "α+β". More specifically, for example, the parameter information is updated by updating by increment the number of times of movement as described above.

Then, whether or not prescribed processing has been performed is determined (step ST34). When stand-by is maintained until prescribed processing is performed (NO in step ST34) and then prescribed processing is performed (YES in step ST34), data is stored in a transmission box (step ST36). Specifically, character information is stored (moved) into transmission box for passing 144 from the work area described above.

### Then the processing ends (return).

The prescribed processing in the present embodiment is, by way of example, processing for stand-by until "dawn breaks" described above. As described above, "dawn breaks" means, for example, that the time kept by a timer has passed a specific time (for example, midnight). When dawn breaks, an information processing apparatus performs such processing as moving character information from the work area to transmission box for passing 144 as described above, as preparation for next passing communication.

On the other hand, when it is determined in step ST30 that the data is rejection setting data (YES in step ST30), steps ST32, ST34 are skipped and the process proceeds to step ST36. Namely, data is stored immediately in the transmission box without updating a parameter. Specifically, without updating a state of the parameter information in the character information, such processing as storage (movement) into transmission box for passing 144 from the work area described above is performed. For example, the state "α" of the parameter information is maintained.

Referring again to Fig. 28, information processing apparatus B has made setting for rejecting information processing apparatus A (terminal ID (TA0123)) as described above. Information processing apparatus A transmits data including the terminal ID (TA0123) and the character information to information processing apparatus B through passing communication.

Thus, information processing apparatus B receives the character information from information processing apparatus A (terminal ID (TA0123)) (step B42) and determines in the display determination processing (step B44) that display cannot be provided. Therefore, information processing apparatus B does not perform display processing based on the character information transmitted from information processing apparatus A in the display processing (step B46). In addition, information processing apparatus B determines in the data processing (step B48) that the data is rejection setting data because the character information includes the terminal ID of information processing apparatus A, and stores the data in transmission box for passing 144 without updating a parameter. Therefore, the state of the parameter information in the character information is maintained as "α".

As described above, information processing apparatus C has made setting for rejecting information processing apparatus A (terminal ID (TA0123)). Information processing apparatus B transmits data including the terminal ID (TA1234) and the character information through passing communication to information processing apparatus C.

Thus, information processing apparatus C receives the character information from information processing apparatus B (terminal ID (TA1234)) (step C42) and determines in the display determination processing (step C44) that partial display can be provided. Therefore, information processing apparatus C performs in the display processing (step C46), display processing based on the terminal ID (TA1234) which is identification information corresponding to the information processing apparatus without using the character information transmitted from information processing apparatus B.

Fig. 32 is a diagram illustrating the display processing based on partial data of reception data.

Referring to Fig. 32, by way of example, a case where display processing is performed as a game application of information processing apparatus 1C is shown. Specifically, a scene that a boat arrived at the dock from another island is shown. Here, based on the terminal ID (TA1234) as another island, "Boat arrived from island (1)!" is displayed. It is noted that character information is not used and hence no character is displayed on a boat, unlike screen IMG12 above.

Referring again to Fig. 28, information processing apparatus C determines in the data processing (step C48) that the data is rejection setting data because the character information includes the terminal ID of information processing apparatus A and stores the data in transmission box for passing 144 without updating a parameter. Therefore, the state of the parameter information in the character information is maintained as "α".

Then, information processing apparatus C transmits data including the terminal ID (TA2345) and the character information to information processing apparatus D through passing communication.

In the processing, when information processing apparatuses B and C reject information processing apparatus A, passing communication is carried out in each apparatus, however, character information of information processing apparatus A is not displayed nor a parameter is updated. Therefore, handling in information processing apparatuses B and C is the same as rejection of data from information processing apparatus A and character information of information processing apparatus A can be propagated to another information processing apparatus.

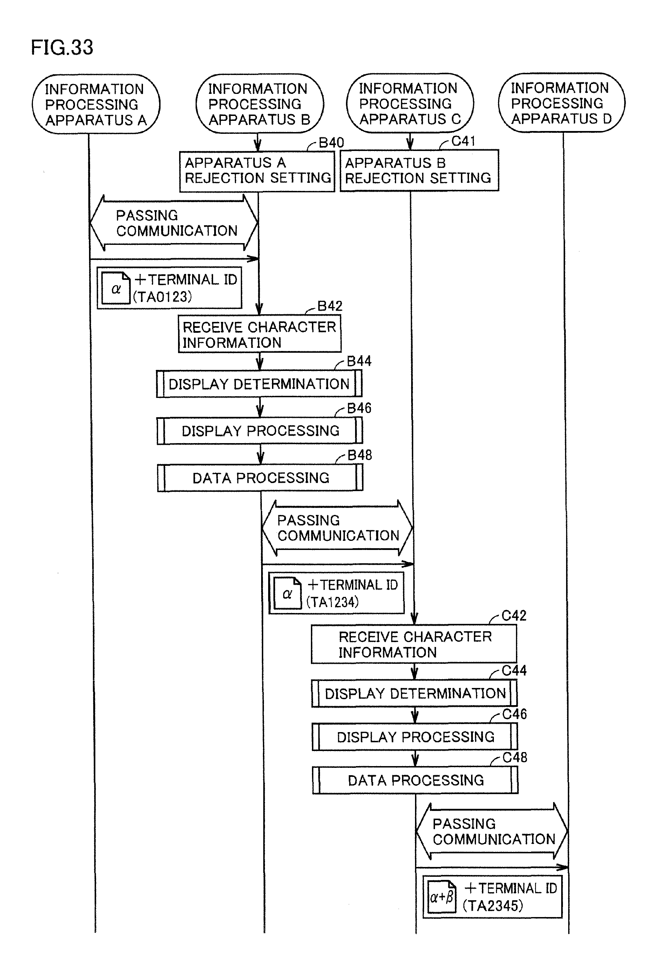

Fig. 33 is a diagram illustrating another specific example of a timing chart in processing for communication among apparatuses each having the function for apparatus rejection setting. Here, a timing chart of processing in each apparatus in information terminal control system 1000 is shown. Information processing apparatuses 1A to 1C are expressed as information processing apparatuses A to C, respectively. In addition, information processing apparatus D is shown as a different information processing apparatus.

Referring to Fig. 33, Fig. 33 is different from Fig. 28 in that setting for rejecting information processing apparatus B based on the function for apparatus rejection setting ("apparatus B rejection setting") is made in step C41 in information processing apparatus C but is otherwise the same as Fig. 28.

Then, information processing apparatus C has made setting for rejecting information processing apparatus B (terminal ID (TA1234)). Information processing apparatus B transmits data including the terminal ID (TA1234) and the character information to information processing apparatus C through passing communication.

Thus, information processing apparatus C receives the character information from information processing apparatus B (terminal ID (TA1234)) (step C42) and determines in the display determination processing (step C44) that display cannot be provided. Therefore, information processing apparatus C does not perform display processing based on the character information transmitted from information processing apparatus B in the display processing (step C46). Then, information processing apparatus C determines in the data processing (step C48) that the data is not the rejection setting data because the character information includes the terminal ID of information processing apparatus A. Therefore, the parameter is updated and character information having the updated parameter information is stored in transmission box for passing 144. Therefore, the state of the parameter information in the character information is updated to "α+β".

Then, information processing apparatus C transmits data including the terminal ID (TA2345) and the character information to information processing apparatus D through passing communication.

In the processing, when information processing apparatus B rejects information processing apparatus A and information processing apparatus C rejects information processing apparatus B, each apparatus carries out passing communication, however, each receives data from the apparatus which it rejects and hence display is not provided. On the other hand, though information processing apparatus C rejects information processing apparatus B, it does not reject the character information of information processing apparatus A included in the received data and hence it updates parameter information in the character information. Therefore, information processing apparatus C updates the parameter information in the character information of information processing apparatus A and transmits the updated character information to information processing apparatus D. Therefore, presentation in accordance with the updated character information described above is realized, and hence zest of data communication can be enhanced.

Though only communication among apparatuses, that is, local communication, has been described here, it is assumed that the Internet communication which is communication with server 2 is also processed in a manner the same as explained above. Namely, it is assumed that a transmission task for transmitting updated character information to server 2 is generated and registered at appropriate timing and transmitted to server 2. It is noted that, when character information is not updated, it is also possible not to generate and register a transmission task and not to transmit a transmission task to server 2.

### [Other Embodiments]

Though a case where setting for rejecting execution of processing for displaying data from a specific information processing apparatus designated by a user is made in a screen for apparatus rejection setting has been described above, a list of information processing apparatuses for which such setting has been made can also externally be obtained for making setting. Specifically, server 2 stores the list and the list may be downloaded. In this case, since the list can be shared among other users, data display processing resulting from passing communication with an undesirable information processing apparatus can be avoided.

In addition, though a case where an information processing apparatus is a rejection setting target with the function for apparatus rejection setting has been described above, contents of data (such as words) can be a rejection setting target without being limited to an apparatus. For example, in a case where transmitted and received data is a message, such setting that display of the message is rejected if an inappropriate word is included in contents of the message may be made.

Moreover, though a case where processing based on both of a terminal ID included in character information in data and a terminal ID of an information processing apparatus which transmits the data is performed has been described above, processing based only on a terminal ID of an information processing apparatus which transmits data may be performed. Namely, without determination as to character information, when an information processing apparatus which is a communication counterpart is a rejected apparatus, display processing based on received data is not performed, and when an apparatus is not a rejected apparatus, display processing based on the received data may be performed.

Furthermore, similarly, in a case where an information processing apparatus which is a communication counterpart is a rejected apparatus, processing for updating a parameter or the like is not performed on received data, and when the communication counterpart is not a rejected apparatus, processing for updating a parameter or the like may be performed on received data.

In addition, an application executable by a personal computer may be provided as a program in the present embodiment. Here, a program according to the present embodiment may be incorporated as a partial function of various applications executed in the personal computer.

While certain example systems, methods, devices, and apparatuses have been described herein, it is to be understood that the appended claims are not to be limited to the systems, methods, devices, and apparatuses disclosed, but on the contrary, are intended to cover various modifications and equivalent arrangements included within the spirit and scope of the appended claims.

## Claims

1. An information processing apparatus (1) provided to be capable of communicating data with another information processing apparatus present within a prescribed range, comprising:
data transmission and reception means (16) configured to transmit and receive data to and from another information processing apparatus;
display control means (13) configured to perform display processing based on received data; and
apparatus rejection setting means (13) configured to be able to set rejection of execution of display processing based on the data received from said another information processing apparatus,
said data transmission and reception means being configured to transmit the received data to another different information processing apparatus provided to be capable of communicating said data, regardless of whether data received from said another information processing apparatus has been set by said apparatus rejection setting means (13).

2. The information processing apparatus (1) according to claim 1,
wherein said data has identification information identifying said information processing apparatus (1), and
said apparatus rejection setting means (13) is configured to set identification information corresponding to said another information processing apparatus as setting for rejecting execution of display processing based on the data received from said another information processing apparatus.

3. The information processing apparatus (1) according to claim 2,
wherein said apparatus rejection setting means (13) is configured to set identification information corresponding to said another information processing apparatus in accordance with a prescribed instruction.

4. The information processing apparatus (1) according to any of claims 1 to 3,
wherein said display control means (13) includes:
data determination means configured to determine whether said received data is data relating to an information processing apparatus (1) set by said apparatus rejection setting means (13); and
data display processing means configured to perform display processing based on the received data, based on the determination.

5. The information processing apparatus (1) according to claim 4,
wherein said data determination means is configured to further determine whether said received data is data received through data communication with the information processing apparatus (1) set by said apparatus rejection setting means (13) when it is determined that said received data is not data relating to the information processing apparatus (1) set by said apparatus rejection setting means (13), and
said data display processing means is configured not to perform said display processing when determination as data received through data communication with the information processing apparatus (1) set by said apparatus rejection setting means (13) has been made.

6. The information processing apparatus (1) according to claim 4,
wherein said data determination means is configured to further determine whether said received data is data received through data communication with the information processing apparatus (1) set by said apparatus rejection setting means (13) when it is determined that said received data is data relating to the information processing apparatus (1) set by said apparatus rejection setting means (13), and
said data display processing means is configured to perform display processing based on partial data of said received data when determination as data received through data communication with an information processing apparatus (1) not set by said apparatus rejection setting means (13) has been made.

7. The information processing apparatus (1) according to claim 4, further comprising data processing means configured to perform prescribed processing on the received data when it is determined that said received data is not data relating to the information processing apparatus (1) set by said apparatus rejection setting means (13) and not to perform said prescribed processing when it is determined that said received data is data relating to the information processing apparatus (1) set by said apparatus rejection setting means (13),
wherein said data transmission and reception means is configured to transmit data processed by said data processing means to another different information processing apparatus provided to be capable of communicating said data.

8. The information processing apparatus (1) according to claim 7,
wherein said prescribed processing is at least processing for editing data received between apparatuses, and
said data processing means is configured to edit said received data when it is determined that said received data is not data relating to the information processing apparatus (1) set by said apparatus rejection setting means (13).

9. The information processing apparatus (1) according to claim 8, wherein said data processing means is configured not to edit said received data when it is determined that said received data is data relating to the information processing apparatus (1) set by said apparatus rejection setting means (13).

10. The information processing apparatus (1) according to claim 8, wherein said data transmission and reception means is configured to transmit edited data processed by said data processing means to another different information processing apparatus provided to be capable of communicating said data.

11. The information processing apparatus (1) according to any of claims 1 to 3,
wherein said display control means (13) includes:
data determination means configured to determine whether said received data is data received through data communication with an information processing apparatus (1) set by said apparatus rejection setting means (13); and
data display processing means configured to perform display processing based on said received data, based on the determination.

12. The information processing apparatus (1) according to claim 11, further comprising data processing means configured to perform prescribed processing on said received data when it is determined that said received data is not data received through data communication with the information processing apparatus (1) set by said apparatus rejection setting means (13) and not to perform said prescribed processing when it is determined that said received data is data received through data communication with the information processing apparatus (1) set by said apparatus rejection setting means (13),
wherein said data transmission and reception means is configured to transmit data processed by said data processing means to another different information processing apparatus provided to be capable of communicating said data.

13. The information processing apparatus (1) according to any of claims 1 to 12, wherein said data includes character information having identification information identifying said information processing apparatus (1).

14. An information processing system (1000), comprising:
a plurality of information processing apparatuses (1) provided to be capable of communicating data with another information processing apparatus present within a prescribed range,
each said information processing apparatus (1) including data transmission and reception means (16), display control means (13), and apparatus rejection setting means (13),
said data transmission and reception means (16) being configured to transmit and receive data to and from another information processing apparatus,
said display control means (13) being configured to perform display processing based on received data,
said apparatus rejection setting means (13) being configured to be able to set rejection of execution of display processing based on the data received from said another information processing apparatus, and
said data transmission and reception means being configured to transmit the received data to another different information processing apparatus provided to be capable of communicating said data, regardless of whether data received from said another information processing apparatus has been set by said apparatus rejection setting means (13).

15. A method for controlling an information processing apparatus provided to be capable of communicating data with another information processing apparatus present within a prescribed range, comprising the steps of:
transmitting and receiving data to and from another information processing apparatus;
performing display processing based on received data; and
rejecting execution of display processing based on data received from said another information processing apparatus,
in said step of transmitting and receiving data, the received data being transmitted to another different information processing apparatus provided to be capable of communicating said data, regardless of whether data received from said another information processing apparatus has been rejected in said rejecting step.

16. A control program executed by a computer of an information processing apparatus provided to be capable of communicating data with another information processing apparatus present within a prescribed range, said computer, by executing said control program, comprising the steps of:
transmitting and receiving data to and from another information processing apparatus;
performing display processing based on received data; and
rejecting execution of display processing based on data received from said another information processing apparatus,
in said step of transmitting and receiving data, the received data being transmitted to another different information processing apparatus provided to be capable of communicating said data, regardless of whether data received from said another information processing apparatus has been rejected in said rejecting step.

## Amended claims

### Amended claims in accordance with Rule 137(2) EPC.

**1.** An information processing apparatus (1) provided to be capable of communicating data with another information processing apparatus present within a prescribed range, comprising:
data transmission and reception means (16) configured to transmit and receive data to and from another information processing apparatus;
display control means (13) configured to perform display processing based on received data; and
apparatus rejection setting means (13) configured to be able to set rejection of execution of display processing based on the data received from said another information processing apparatus,
said data transmission and reception means being configured to transmit the received data to another different information processing apparatus provided to be capable of communicating said data, regardless of whether data received from said another information processing apparatus has been set by said apparatus rejection setting means (13).

**2.** The information processing apparatus (1) according to claim 1,
wherein said data has identification information identifying said information processing apparatus (1), and
said apparatus rejection setting means (13) is configured to set identification information corresponding to said another information processing apparatus as setting for rejecting execution of display processing based on the data received from said another information processing apparatus.

**3.** The information processing apparatus (1) according to claim 2,
wherein said apparatus rejection setting means (13) is configured to set identification information corresponding to said another information processing apparatus in accordance with a prescribed instruction.

**4.** The information processing apparatus (1) according to any of claims 1 to 3, wherein said display control means (13) includes:
data determination means configured to determine whether said received data is data relating to an information processing apparatus (1) set by said apparatus rejection setting means (13); and
data display processing means configured to perform display processing based on the received data, based on the determination.

**5.** The information processing apparatus (1) according to claim 4,
wherein said data determination means is configured to further determine whether said received data is data received through data communication with the information processing apparatus (1) set by said apparatus rejection setting means (13) when it is determined that said received data is not data relating to the information processing apparatus (1) set by said apparatus rejection setting means (13), and
said data display processing means is configured not to perform said display processing when determination as data received through data communication with the information processing apparatus (1) set by said apparatus rejection setting means (13) has been made.

**6.** The information processing apparatus (1) according to claim 4,
wherein said data determination means is configured to further determine whether said received data is data received through data communication with the information processing apparatus (1) set by said apparatus rejection setting means (13) when it is determined that said received data is data relating to the information processing apparatus (1) set by said apparatus rejection setting means (13), and
said data display processing means is configured to perform display processing based on partial data of said received data when determination as data received through data communication with an information processing apparatus (1) not set by said apparatus rejection setting means (13) has been made.

**7.** The information processing apparatus (1) according to claim 4, further comprising data processing means configured to perform prescribed processing on the received data when it is determined that said received data is not data relating to the information processing apparatus (1) set by said apparatus rejection setting means (13) and not to perform said prescribed processing when it is determined that said received data is data relating to the information processing apparatus (1) set by said apparatus rejection setting means (13),
wherein said data transmission and reception means is configured to transmit data processed by said data processing means to another different information processing apparatus provided to be capable of communicating said data.

**8.** The information processing apparatus (1) according to claim 7,
wherein said prescribed processing is at least processing for editing data received between apparatuses, and
said data processing means is configured to edit said received data when it is determined that said received data is not data relating to the information processing apparatus (1) set by said apparatus rejection setting means (13).

**9.** The information processing apparatus (1) according to claim 8, wherein said data processing means is configured not to edit said received data when it is determined that said received data is data relating to the information processing apparatus (1) set by said apparatus rejection setting means (13).

**10.** The information processing apparatus (1) according to claim 8, wherein said data transmission and reception means is configured to transmit edited data processed by said data processing means to another different information processing apparatus provided to be capable of communicating said data.

**11.** The information processing apparatus (1) according to any of claims 1 to 3,
wherein said display control means (13) includes:
data determination means configured to determine whether said received data is data received through data communication with an information processing apparatus (1) set by said apparatus rejection setting means (13); and
data display processing means configured to perform display processing based on said received data, based on the determination.

**12.** The information processing apparatus (1) according to claim 11, further comprising data processing means configured to perform prescribed processing on said received data when it is determined that said received data is not data received through data communication with the information processing apparatus (1) set by said apparatus rejection setting means (13) and not to perform said prescribed processing when it is determined that said received data is data received through data communication with the information processing apparatus (1) set by said apparatus rejection setting means (13),
wherein said data transmission and reception means is configured to transmit data processed by said data processing means to another different information processing apparatus provided to be capable of communicating said data.

**13.** The information processing apparatus (1) according to any of claims 1 to 12, wherein said data includes character information having identification information identifying said information processing apparatus (1).

**14.** The information processing apparatus (1) according to any of the preceding claims, wherein said data transmission and reception means (16) is configured to transmit and receive said data to and from said another information processing apparatus and to transmit said received data to said another different information processing apparatus through direct wireless communication without passing said data through a network (9).

**15.** The information processing apparatus according to any of claims 1 to 14, wherein said data transmission and reception means (16) is configured to transmit and receive said data to and from said another information processing apparatus and to transmit said received data to said another different information processing apparatus without any input of a specific instruction.

**16.** An information processing system (1000), comprising:
a plurality of information processing apparatuses (1) provided to be capable of communicating data with another information processing apparatus present within a prescribed range,
each said information processing apparatus (1) including data transmission and reception means (16), display control means (13), and apparatus rejection setting means (13),
said data transmission and reception means (16) being configured to transmit and
receive data to and from another information processing apparatus,
said display control means (13) being configured to perform display processing based on received data,
said apparatus rejection setting means (13) being configured to be able to set rejection of execution of display processing based on the data received from said another information processing apparatus, and
said data transmission and reception means being configured to transmit the received data to another different information processing apparatus provided to be capable of communicating said data, regardless of whether data received from said another information processing apparatus has been set by said apparatus rejection setting means (13).

**17.** A method for controlling an information processing apparatus provided to be capable of communicating data with another information processing apparatus present within a prescribed range, comprising the steps of:
transmitting and receiving data to and from another information processing apparatus;
performing display processing based on received data; and
rejecting execution of display processing based on data received from said another information processing apparatus,
in said step of transmitting and receiving data, the received data being transmitted to another different information processing apparatus provided to be capable of communicating said data, regardless of whether data received from said another information processing apparatus has been rejected in said rejecting step.

**18.** A control program executed by a computer of an information processing apparatus provided to be capable of communicating data with another information processing apparatus present within a prescribed range, said computer, by executing said control program, comprising the steps of:
transmitting and receiving data to and from another information processing apparatus;
performing display processing based on received data; and
rejecting execution of display processing based on data received from said another information processing apparatus,
in said step of transmitting and receiving data, the received data being transmitted to another different information processing apparatus provided to be capable of communicating said data, regardless of whether data received from said another information processing apparatus has been rejected in said rejecting step.
